# EUROPEAN PATENT APPLICATION

(11) **EP 4 386 476 A1**
(43) Date of publication of application: **19.06.2024**
(21) Application number: 22856075.1
(22) Date of filing: 29.07.2022
(51) Int. Cl.: G03B 5/00, G03B 17/12, G02B 7/09, G02B 7/02, G02B 27/64, H02K 33/18, H02K 11/215, H02K 11/30

(54) **LENS DRIVING DEVICE AND CAMERA DEVICE COMPRISING SAME**

(30) Priority: 11.08.2021 KR 20210106210
(71) Applicant: LG INNOTEK CO., LTD., Seoul 07796 (KR)
(72) Inventor: JUN, Jae Hoon, Seoul 07796 (KR); MIN, Sang Jun, Seoul 07796 (KR)
(74) Representative: Plasseraud IP
(86) International application number: PCT/KR2022/011223
(87) International publication number: WO 2023/018076

(57) **Abstract**

An embodiment of the present disclosure discloses a lens driving device including a first lens group including at least one lens, a first magnet coupled to the first lens group, a first coil disposed at a location corresponding to the first magnet, N sensors that detect a magnetic field of the first magnet, and a driving part that receives outputs of the N sensors and controls a current applied to the first coil, wherein N is a natural number of three or more, the N sensors are connected to have (N-1)/2 serial connections when N is an odd number, and the N sensors are connected to have N/2 serial connections when N is an even number.

## Description

### BACKGROUND

### 1. Field of the Invention

The present disclosure relates to a lens driving device and a camera device including the same.

### 2. Discussion of Related Art

Cameras are devices that capture a picture or moving image of a subject, and are mounted on portable devices, drones, vehicles, or the like. A camera device has, in order to improve image quality, an image stabilization (IS) function of correcting or preventing shaking of an image caused by a motion of a user, an auto focusing (AF) function of automatically adjusting a distance between an image sensor and a lens to adjust a focal length of the lens, and a zooming function of increasing or decreasing the magnification of a distant subject through a zoom lens.

Meanwhile, in the image sensor, a resolution becomes larger as the number of pixels becomes higher, and thus the size of the pixel is reduced. As the pixel becomes smaller, the quantity of light received for the same time is reduced. Thus, as a camera has the higher number of pixels, the shaking of an image caused by shaking of hands that occurs when a shutter speed is reduced in a dark environment may be more severe. An optical image stabilizer (OIS) technology of correcting motion by changing a path of light is present as a representative IS technology.

According to a general OIS technology, the movement of a camera may be detected through a gyro sensor or the like, and on the basis of the detected movement, the lens may be tilted or moved, or the camera device including the lens and the image sensor may be tilted or moved. When the lens or the camera device including the lens and the image sensor is tilted or moved for the OIS, a space for tilting or moving the lens or the camera device needs to be additionally secured around the lens or the camera device.

Meanwhile, an actuator for the OIS may be disposed near the lens. In this case, the actuator for the OIS may include an actuator responsible for tilting in an X axis and an actuator responsible for tilting in a Y axis, the X axis and the Y axis being perpendicular to an optical axis Z.

However, according to the needs of ultra-slim and ultra-small camera devices, a space for arranging the actuator for the OIS may be greatly limited, and it may be difficult to ensure a sufficient space for tilting or moving the lens or the camera device itself including the lens and the image sensor for the OIS. Further, it is preferable that, as the camera has the larger number of pixels, the size of the lens becomes greater to increase the quantity of received light. In this case, there is a limit to increase the size of the lens due to the space occupied by the actuator for the OIS.

Further, when all the zooming function, the AF function, and the OIS function are included in the camera device, a magnet for the OIS function and a magnet for the AF function or the zooming function are arranged close to each other to cause magnetic field interference.

Further, in a Hall sensor for position detection, the accuracy is lowered and noise is generated at a long stroke.

### SUMMARY OF THE INVENTION

The present disclosure is directed to providing a lens driving device and a camera device capable of being applied to an ultra-thin, ultra-small, and high-resolution camera.

Further, the present disclosure is also directed to providing a lens driving device and a camera device capable of increasing a movement distance of a lens assembly through the number of driving coils.

Further, the present disclosure is also directed to providing a lens driving device and a camera device capable of more accurately detecting an improved movement distance by improving the linearity for a location through connection between a plurality of Hall sensors.

Further, the present disclosure is also directed to providing a lens driving device and a camera device that have improved design easiness and manufacturing cost reduction through the connection between a plurality of Hall sensors.

Further, the present disclosure is also directed to providing a lens driving device and a camera device that have an increased movement distance for auto focusing (AF) in order to implement a high magnification zoom.

The problem to be solved in embodiments is not limited thereto and also includes the purpose or effect that may be identified from the technical solution or the embodiments of the problem to be described below.

According to an aspect of the present disclosure, there is provided a lens driving device including a first lens group including at least one lens, a first magnet coupled to the first lens group, a first coil disposed at a location corresponding to the first magnet, N sensors that detect a magnetic field of the first magnet, and a driving part that receives outputs of the N sensors and controls a current applied to the first coil, wherein N may be a natural number of three or more, the N sensors are connected to have (N-1)/2 serial connections when N is an odd number, and the N sensors are connected to have N/2 serial connections when N is an even number.

The N sensors may include a first sensor, a second sensor, and a third sensor that detect the magnetic field of the first magnet, the driving part may receive outputs of the first sensor, the second sensor, and the third sensor and control the current applied to the first coil, the driving part may include a first input channel and a second input channel, the first sensor and the second sensor may be connected to the first input channel, and the third sensor may be connected to the second input channel.

The N sensors may further include a fourth sensor, and the fourth sensor may be connected to the second input channel.

The first sensor and the second sensor may be connected in series.

The N sensors may be sequentially arranged side by side in an optical axis direction.

The first lens group may move 5 mm or more in an optical axis direction.

The first lens group may move two times or more a magnetic field sensing region of at least one of the first sensor, the second sensor, and the third sensor, and the magnetic field sensing region may be a region having a slope of 0.5 to 1 time (50% to 100%) of a maximum slope of a detected magnetic field value with respect to a location of the first magnet by at least one sensor among the first sensor, the second sensor, and the third sensor.

A length of the first magnet in an optical axis direction may be greater than a distance between a center of the first sensor and a center of the third sensor.

The lens driving device may further include a second coil that is disposed parallel to the first coil in an optical axis direction, is disposed at a location corresponding to the first magnet, and receives a current from the driving part, and the first coil and the second coil may be connected in parallel.

Respective resistance values of the N sensors may be equal to each other.

The lens driving device may include a second lens group including at least one lens, a second magnet coupled to the second lens group, a second coil disposed at a location corresponding to the second magnet, and a fifth sensor, a sixth sensor, and a seventh sensor that detect a magnetic field of the second magnet, wherein the driving part may receive output of the fifth sensor, the sixth sensor, and the seventh sensor and control a current applied to the second coil, the driving part may include a third input channel and a fourth input channel, the fifth sensor and the sixth sensor may be connected to the third input channel, and the seventh sensor may be connected to the fourth input channel.

The first sensor, the second sensor, and the third sensor may be arranged inside the first coil.

The fifth sensor, the sixth sensor, and the seventh sensor may be arranged inside the second coil.

A first input signal of the first input channel may be input to and amplified by a first amplifier, and a second input signal of the second input channel may be input to and amplified by a second amplifier.

The first input signal amplified by the first amplifier and the second input signal amplified by the second amplifier may be provided to a selection unit.

The first input signal or the second input signal selected by the selection unit may be provided to a converter.

The driving part may adjust the current applied to the first coil according to the first input signal or the second input signal converted by the converter.

According to another aspect of the present disclosure, there is provided a lens driving device including a first lens group including at least one lens, a first magnet coupled to the first lens group, a first coil disposed at a location corresponding to the first magnet, a first sensor, a second sensor, and a third sensor that detect a magnetic field of the first magnet, and a driving part that receives outputs of the first sensor, the second sensor, and the third sensor, and controls a current applied to the first coil, wherein the driving part may include a first input channel, the first sensor and the second sensor may be connected in series, and the first sensor and the second sensor connected in series and the third sensor may be connected in parallel and connected to the first input channel.

According to still another aspect of the present disclosure, there is provided a lens driving device including a first lens group including at least one lens, a first magnet coupled to the first lens group, a first coil disposed at a location corresponding to the first magnet, a first sensor, a second sensor, a third sensor, and a fourth sensor that detect a magnetic field of the first magnet, and a driving part that receives outputs of the first sensor, the second sensor, the third sensor, and the fourth sensor, and controls a current applied to the first coil, wherein the driving part may include a first input channel, the first sensor and the second sensor may be connected in series, the third sensor and the fourth sensor are connected in series, and the first sensor and the second sensor connected in series and the third sensor and the fourth sensor connected in series may be connected in parallel and connected to the first input channel.

According to yet another aspect of the present disclosure, there is provided a lens driving device including a first lens group including at least one lens, a first magnet coupled to the first lens group, a first coil disposed at a location corresponding to the first magnet, a plurality of sensors that detect a magnetic field of the first magnet, and a driving part that receives outputs of the plurality of sensors and controls a current applied to the first coil, wherein the driving unit may include a plurality of input channels, the plurality of sensors may be connected to the plurality of input channels, and the number of the plurality of sensors may be greater than the number of the plurality of input channels.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a perspective view of a camera device according to an embodiment;
FIG. 2A is an exploded perspective view of the camera device according to an embodiment;
FIG. 2B is a cross-sectional view along line AA' of FIG. 1;
FIG. 3 is a perspective view of a camera device according to another embodiment;
FIG. 4 is an exploded perspective view of a first camera actuator according to an embodiment;
FIG. 5 is a perspective view of the first camera actuator according to an embodiment from which a shield can and a board are removed;
FIG. 6 is a cross-sectional view along line BB' of FIG. 5;
FIG. 7 is a cross-sectional view along line CC' of FIG. 5;
FIG. 8 is a perspective view of a second camera actuator according to an embodiment;
FIG. 9 is an exploded perspective view of the second camera actuator according to the embodiment;
FIG. 10 is a cross-sectional view along line DD' of FIG. 8;
FIG. 11 is a cross-sectional view along line EE' of FIG. 8;
FIG. 12 is a block diagram illustrating a configuration of a camera device according to an embodiment of the present disclosure;
FIG. 13 is a block diagram illustrating a detailed configuration of a location sensor part of FIG. 12;
FIGS. 14A to 14C are views for describing a connection relationship of the sensor unit of FIG. 13;
FIG. 15 is a view for describing a connection between a driving part and the sensor unit;
FIG. 16 is a view for describing a connection relationship of the sensor unit according to the embodiment of the present disclosure;
FIG. 17 is a view for describing a connection relationship of a sensor unit according to another embodiment of the present disclosure;
FIG. 18 is a view illustrating a connection relationship between a power terminal and a driver of a sensor unit according to various aspects;
FIG. 19 is a view illustrating a connection relationship between an output terminal and the driver of the sensor unit according to various aspects;
FIG. 20 is a block diagram of a sensor unit, a driver, a driving coil, and a driving magnet according to a first embodiment;
FIG. 21 is a view for describing a relationship between the driving magnet and the sensor units when there are two sensor units;
FIG. 22 is a view for describing a relationship between the driving magnet and the sensor units when there are three sensor units;
FIG. 23 is a graph showing an output signal of the sensor unit in FIG. 22;
FIG. 24 is a graph showing an output signal of the sensor unit according to an embodiment;
FIG. 25 is a block diagram of a sensor unit, a driver, a driving coil, and a driving magnet according to a second embodiment;
FIG. 26 is a block diagram of a sensor unit, a driver, a driving coil, and a driving magnet according to a third embodiment;
FIG. 27 is a block diagram of a sensor unit, a driver, a driving coil, and a driving magnet according to a fourth embodiment;
FIG. 28 is a flowchart for describing a method of driving the driver according to an embodiment;
FIG. 29 is a perspective view of a mobile terminal to which the camera device according to the embodiment is applied; and
FIG. 30 is a perspective view of a vehicle to which the camera device according to the embodiment is applied.

### DETAILED DESCRIPTION OF EXEMPLARY EMBODIMENTS

The present disclosure may be modified in various changes and may have various embodiments and is thus intended to describe specific embodiments with the accompanying drawings. However, it should be understood that the present disclosure is not limited to the specific embodiments and includes all changes, equivalents, and substitutes included in the spirit and scope of the present disclosure.

Terms including an ordinal number such as second and first may be used to describe various components, but the components not limited by the terms. The terms are used only for the purpose of distinguishing one component from another component. For example, without departing from the scope of the present disclosure, a second component may be referred to as a first component, and similarly, the first component may be referred to as the second component. Term "and/or" includes any or a combination of a plurality of related listed items.

It should be understood that, when it is referenced that a first component is "connected" or "coupled" to a second component, the first component may be directly connected or coupled to the second component or a third component may be present between the first component and the second component. On the other hand, it should be understood that, when a first component is "directly connected" or "directly coupled" to a second component, a third component is not present therebetween.

Terms used in the present application are used only to describe the specific embodiments and are not intended to limit the present disclosure. Singular expressions include plural expressions unless clearly otherwise indicated in the context. It should be understood in the present application that terms such as "include" and "have" are intended to indicate that there are features, numbers, steps, operations, components, parts, or combinations thereof that are described in the specification and do not exclude in advance the possibility of the presence or addition of one or more other features, numbers, steps, operations, components, parts, or combinations thereof.

Unless otherwise defined, all terms used herein including technical or scientific terms have the same meanings as those commonly understood by those skilled in the art to which the present disclosure belongs. Terms defined in commonly used dictionaries should be interpreted as having the same meanings in the context of the related art and may not be interpreted with ideal or excessively formal meanings, unless explicitly defined in the present application.

Hereinafter, embodiments will be described in detail with reference to the accompanying drawings, the same or corresponding components are designated by the same reference numerals regardless of the reference numerals, and the duplicated description thereof will be omitted.

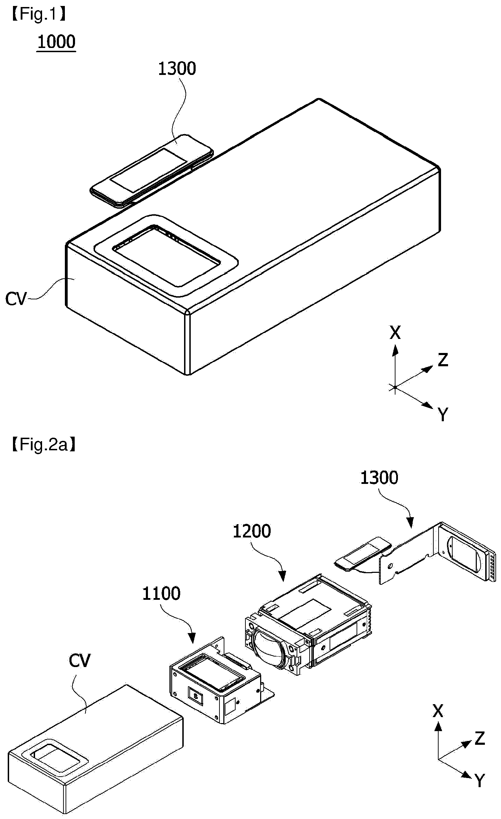

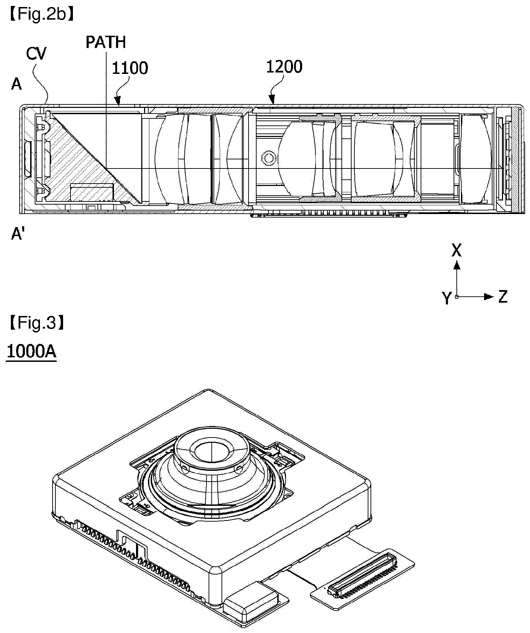

FIG. 1 is a perspective view of a camera device according to an embodiment, FIG. 2A is an exploded perspective view of the camera device according to the embodiment, and FIG. 2B is a cross-sectional view along line AA' of FIG. 1.

Referring to FIGS. 1, 2A, and 2B, a camera device 1000 according to the embodiment may include a cover CV, a first camera actuator 1100, a second camera actuator 1200, and a circuit board 1300. Here, the first camera actuator 1100 may be used interchangeably with a first actuator, and the second camera actuator 1200 may be used interchangeably with a second actuator. Further, the second camera actuator 1200 may be used interchangeably with a "lens driving device," a "lens driving unit," a "lens driving module," or the like. Furthermore, the camera device 1000 may also be referred to as a "camera module," a "camera unit," an "imaging device," an "imaging module," an "imaging unit," or the like.

The cover CV may cover the first camera actuator 1100 and the second camera actuator 1200. A coupling force between the first camera actuator 1100 and the second camera actuator 1200 can be improved by the cover CV.

Furthermore, the cover CV may be made of a material that blocks electromagnetic waves. Accordingly, the first camera actuator 1100 and the second camera actuator 1200 inside the cover CV can be easily protected.

Further, the first camera actuator 1100 may be an optical image stabilizer (OIS) actuator.

The first camera actuator 1100 may include a fixed focal length lens disposed in a predetermined barrel (not illustrated). The fixed focal length lens may also be referred to as a "single focal length lens" or a "single lens."

The first camera actuator 1100 may change an optical path. In an embodiment, the first camera actuator 1100 may change the optical path vertically through an optical member (for example, a mirror or a prism) therein. Due to this configuration, even when the thickness of a mobile terminal is reduced, a lens configuration larger than the thickness of the mobile terminal is disposed inside the mobile terminal through the change in the optical path, and thus a magnification function, an auto focusing (AF) function, and an OIS function can be performed.

The second camera actuator 1200 may be disposed at a rear end of the first camera actuator 1100. The second camera actuator 1200 may be coupled to the first camera actuator 1100. Further, the coupling therebetween may be performed in various manners.

Further, the second camera actuator 1200 may be a zooming actuator or an AF actuator. For example, the second camera actuator 1200 may support one or more lenses and move the lens in response to a predetermined control signal of a controller to perform the AF function or a zooming function.

The circuit board 1300 may be disposed at a rear end of the second camera actuator 1200. The circuit board 1300 may be electrically connected to the second camera actuator 1200 and the first camera actuator 1100. Further, the circuit board 1300 may be provided as a plurality of circuit boards 1300.

The camera device according to the embodiment may be configured as one or more camera devices. For example, the plurality of camera devices may include a first camera device and a second camera device.

Further, the first camera device may include one or more actuators. For example, the first camera device may include the first camera actuator 1100 and the second camera actuator 1200.

Further, the second camera device may include an actuator (not illustrated) that is disposed in a predetermined housing (not illustrated) and may drive a lens part. Although the description is based on this, the description may be also based on a concept in which the lens part is included in the actuator. Further, the actuator may be a voice coil motor, a micro actuator, a silicon actuator, or the like, and may be applied in various methods such as an electrostatic method, a thermal method, a bimorph method, and an electrostatic force method, but the present disclosure is not limited thereto. Further, in the present specification, the camera actuator may be referred to as an actuator or the like. Further, the camera device including the plurality of camera devices may be mounted in various electronic devices such as a mobile terminal.

Referring to FIG. 3, the camera device according to the embodiment may include the first camera actuator 1100 for performing the OIS function and the second camera actuator 1200 for performing the zooming function and the AF function.

Light may enter the inside of the camera device through an opening region located on an upper surface of the first camera actuator 1100. That is, the light may enter the inside of the first camera actuator 1100 in an optical axis direction (for example, an X-axis direction), and the optical path may be changed in a vertical direction (for example, a Z-axis direction) through the optical member. Further, the light may pass through the second camera actuator 1200 and be incident on an image sensor IS located at one end of the second camera actuator 1200 (PATH).

In the present specification, a bottom surface is one side in a first direction. Further, the first direction is the X-axis direction on the drawing and may be used interchangeably with the second axis direction. The second direction is the Y-axis direction on the drawing and may be used interchangeably with the first axis direction. The second direction is a direction perpendicular to the first direction. Further, a third direction is a Z-axis direction on the drawing and may be used interchangeably with the third axis direction. The third direction is a direction perpendicular to both the first direction and the second direction. Here, the third direction (the Z-axis direction) may correspond to a direction of the optical axis, the first direction (the X-axis direction) and the second direction (the Y-axis direction) are directions perpendicular to the optical axis, and the tilting may be performed by the second camera actuator. A detailed description thereof will be made below.

Further, in the following description of the first camera actuator 1100 and the second camera actuator 1200, the optical axis direction is the third direction (the Z-axis direction), and the following direction will be made on the basis of this.

Further, according to this configuration, the camera device according to the embodiment may change the optical path to overcome spatial limitations of the first camera actuator and the second camera actuator. That is, the camera device according to the embodiment may extend the optical path while minimizing the thickness of the camera device due to the change of the optical path. Furthermore, it should be understood that the second camera actuator may control a focus or the like in the extended optical path to provide a high range of magnification.

Further, the camera device according to the embodiment may implement the OIS function through control of the optical path through the first camera actuator, thereby minimizing occurrence of a decenter phenomenon or a tilting phenomenon, and achieving the best optical properties.

Furthermore, the second camera actuator 1200 may include an optical system (a lens part) and a lens driving part. For example, at least one of a first lens assembly, a second lens assembly, a third lens assembly, and a guide pin may be arranged in the second camera actuator 1200.

Further, the second camera actuator 1200 may be provided with a coil and a magnet to perform a high-magnification zooming function.

For example, the first lens assembly and the second lens assembly may be moving lenses that are moved through the coil, the magnet, and the guide pin, and the third lens assembly may be a fixed lens, but the present disclosure is not limited thereto. For example, the third lens assembly may function as a focator that forms an image at a specific location, and the first lens assembly may function as a variator that re-images, at another location, the image formed by the third lens assembly that is the focator. Meanwhile, in the first lens assembly, a distance to a subject or an image distance is greatly changed, and thus a magnification change may be large. The first lens assembly that is the variator may perform an important role in changing a focal length or a magnification of the optical system. Meanwhile, an image point formed by the first lens assembly that is the variator may be slightly different according to a location. Accordingly, the second lens assembly may perform a location compensation function for the image formed by the variator. For example, the second lens assembly may function as a compensator that accurately images, at an actual location of an image sensor, an image point formed by the first lens assembly that is the variator. For example, the first lens assembly and the second lens assembly may be driven using an electromagnetic force due to the interaction between the coil and the magnet. The above description may be applied to the lens assembly which will be described below. Further, an additional lens assembly (for example, a fourth lens assembly) may further be present.

Meanwhile, when an OIS actuator and an AF or zooming actuator are arranged according to the embodiment of the present disclosure, magnetic field interference with a magnet for AF or zooming can be prevented during an OIS operation. Since a first driving magnet of the first camera actuator 1100 is disposed separately from the second camera actuator 1200, magnetic field interference between the first camera actuator 1100 and the second camera actuator 1200 can be prevented. In the present specification, the OIS may be used interchangeably with terms such as hand shaking correction, optical image stabilization, optical image correction, and shaking correction.

FIG. 3 is a perspective view of a camera device according to another embodiment.

Referring to FIG. 3, a lens driving device, which will be described below, may be mounted on a camera device 1000A that performs the zooming, the AF, or the like without changing the optical path as well as the camera device that changes the optical path through the optical member as described above.

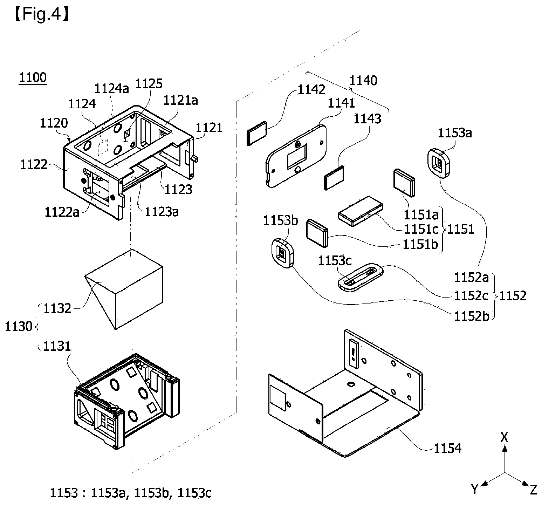

FIG. 4 is an exploded perspective view of the first camera actuator according to an embodiment.

Referring to 4, the first camera actuator 1100 according to the embodiment includes a first shield can (not illustrated), a first housing 1120, a mover 1130, a rotation part 1140, and a first driving part 1150.

The mover 1130 may include a holder 1131 and an optical member 1132 seated on the holder 1131. Further, the rotation part 1140 includes a rotation plate 1141, a first magnetic body 1142 having a coupling force with the rotation plate 1141, and a second magnetic body 1143 located inside the rotation plate 1141. Further, the first driving part 1150 may include a driving magnet 1151, a driving coil 1152, a Hall sensor unit 1153, and a first board part 1154.

The first shield can (not illustrated) may be located on the outermost side of the first camera actuator 1100 and located to surround the rotation part 1140 and the first driving part 1150 which will described below.

The first shield can (not illustrated) may block or reduce electromagnetic waves generated on the outside. Accordingly, occurrence of malfunction of the rotation part 1140 or the first driving part 1150 can be reduced.

The first housing 1120 may be located inside the first shield can (not illustrated). Further, the first housing 1120 may be located inside the first board part 1154 which will be described below. The first housing 1120 may be fitted into or matched with and fastened to the first shield can (not illustrated).

The first housing 1120 may include a plurality of housing side parts. The first housing 1120 may include a first housing side part 1121, a second housing side part 1122, a third housing side part 1123, and a fourth housing side part 1124.

The first housing side part 1121 and the second housing side part 1122 may be arranged to face each other. Further, the third housing side part 1123 and the fourth housing side part 1124 may be arranged between the first housing side part 1121 and the second housing side part 1122.

The third housing side part 1123 may be in contact with the first housing side part 1121, the second housing side part 1122, and the fourth housing side part 1124. Further, the third housing side part 1123 may include a bottom surface as a lower side of the first housing 1120.

Further, the first housing side part 1121 may include a first housing hole 1121a. A third coil 1152a, which will be described below, may be located in the first housing hole 1121a.

Further, the second housing side part 1122 may include a second housing hole 1122a. Further, a fourth coil 1152b, which will be described below, may be located in the second housing hole 1122a.

The third coil 1152a and the fourth coil 1152b may be coupled to the first board part 1154. In an embodiment, the third coil 1152a and the fourth coil 1152b may be electrically connected to the first board part 1154 so that a current may flow therethrough. This current is a component of an electromagnetic force by which the second camera actuator may be tilted with respect to the X axis.

Further, the third housing side part 1123 may include a third housing hole 1123a. A fifth coil 1152c, which will be described below, may be located in the third housing hole 1123a. The fifth coil 1152c may be coupled to the first board part 1154. Further, the fifth coil 1152c may be electrically connected to the first board part 1154 so that a current may flow therethrough. This current is a component of an electromagnetic force by which the second camera actuator may be tilted with respect to the Y axis.

The fourth housing side part 1124 may include a first housing groove 1124a. The first magnetic body 1142, which will be described below, may be disposed in a region facing the first housing groove 1124a. Accordingly, the first housing 1120 may be coupled to the rotation plate 1141 by a magnetic force or the like.

Further, the first housing groove 1124a according to the embodiment may be located at an inner surface or outer surface of the fourth housing side part 1124. Accordingly, the first magnetic body 1142 may be also disposed to correspond to a location of the first housing groove 1124a.

Further, the first housing 1120 may include an accommodation part 1125 defined by the first to fourth housing side parts 1121 to 1124. The mover 1130 may be located in the accommodation part 1125.

The mover 1130 includes the holder 1131 and the optical member 1132 seated on the holder 1131.

The holder 1131 may be seated on the accommodation part 1125 of the first housing 1120. The holder 1131 may include a first outer prism surface to a fourth outer prism surface respectively corresponding to the first housing side part 1121, the second housing side part 1122, the third housing side part 1123, and the fourth housing side part 1124.

A seating groove on which the second magnetic body 1143 may be seated may be disposed in the fourth outer prism surface facing the fourth housing side part 1124.

The optical member 1132 may be seated on the holder 1131. To this end, the holder 1131 may have a seating surface, and the seating surface may be formed by an accommodation groove. The optical member 1132 may include a reflective part disposed therein. However, the present disclosure is not limited thereto. Further, the optical member 1132 may reflect, into the camera device, light reflected from the outside (for example, an object). In other words, the optical member 1132 may change a path of the reflected light so as to overcome spatial limitations of the first camera actuator and the second camera actuator. Accordingly, it should be understood that the camera device can expand the optical path while minimizing a thickness thereof, and thus can also provide a high range of magnifications.

The rotation part 1140 includes the rotation plate 1141, the first magnetic body 1142 having a coupling force with the rotation plate 1141, and the second magnetic body 1143 located inside the rotation plate 1141.

The rotation plate 1141 may be coupled to the mover 1130 and the first housing 1120 described above. The rotation plate 1141 may include an additional magnetic body (not illustrated) located therein.

Further, the rotation plate 1141 may be disposed adjacent to an optical axis. Accordingly, the actuator according to the embodiment may easily change the optical path according to first and second axis tilts which will be described below.

The rotation plate 1141 may include a first protrusion spaced apart therefrom in the first direction (the X-axis direction) and a second protrusion spaced part therefrom in a second direction (the Y-axis direction). Further, the first protrusion and the second protrusion may protrude in opposite directions. A detailed description thereof will be made below.

Further, the first magnetic body 1142 may include a plurality of yokes, and the plurality of yokes may be located to face each other with respect to the rotation plate 1141. In an embodiment, the first magnetic body 1142 may include the plurality of yokes facing each other. Further, the rotation plate 1141 may be located between the plurality of yokes.

The first magnetic body 1142 may be located inside the first housing 1120 as described above. Further, as described above, the first magnetic body 1142 may be seated on the inner surface or outer surface of the fourth housing side part 1124. For example, the first magnetic body 1142 may be seated on a groove formed in the outer surface of the fourth housing side part 1124. Further, the first magnetic body 1142 may be seated on the first housing groove 1124a.

Further, the second magnetic body 1143 may be located in the mover 1130, particularly, on an outer surface of the holder 1131. Due to this configuration, the rotation plate 1141 may be easily coupled to the first housing 1120 and the mover 1130 using a coupling force due to a magnetic force between the second magnetic body 1143 and the first magnetic body 1142 therein. In the present disclosure, locations of the first magnetic body 1142 and the second magnetic body 1143 may be changed to each other.

The first driving part 1150 may include the driving magnet 1151, the driving coil 1152, the Hall sensor unit 1153, and the first board part 1154.

The driving magnet 1151 may include a plurality of magnets. In an embodiment, the driving magnet 1151 may include a third magnet 1151a, a fourth magnet 1151b, and a fifth magnet 1151c.

The third magnet 1151a, the fourth magnet 1151b, and the fifth magnet 1151c may be located on the outer surface of the holder 1131. Further, the third magnet 1151a and the fourth magnet 1151b may be located to face each other. Further, the fifth magnet 1151c may be located on a bottom surface among the outer surface of the holder 1131. A detailed description thereof will be made below.

The driving coil 1152 may include a plurality of coils. In an embodiment, the driving coil 1152 may include the third coil 1152a, the fourth coil 1152b, and the fifth coil 1152c.

The third coil 1152a may be located to face the third magnet 1151a. Accordingly, as described above, the third coil 1152a may be located in the first housing hole 1121a of the first housing side part 1121.

Further, the fourth coil 1152b may be located to face the fourth magnet 1151b. Accordingly, as described above, the fourth coil 1152b may be located in the second housing hole 1122a of the second housing side part 1122.

The third coil 1152a may be located to face the fourth coil 1152b. That is, the third coil 1152a may be located to be symmetrical to the fourth coil 1152b with respect to the first direction (the X-axis direction). This may be equally applied even to the third magnet 1151a and the fourth magnet 1151b. That is, the third magnet 1151a and the fourth magnet 1151b may be located to be symmetrical to each other with respect to the first direction (the X-axis direction). Further, the third coil 1152a, the fourth coil 1152b, the third magnet 1151a, and the fourth magnet 1151b may be arranged to at least partially overlap each other in the second direction (the Y-axis direction). Due to this configuration, X-axis tilting may be accurately performed without inclination to one side by using an electromagnetic force between the third coil 1152a and the third magnet 1151a and an electromagnetic force between the fourth coil 1152b and the fourth magnet 1151b.

The fifth coil 1152c may be located to face the fifth magnet 1151c. Accordingly, as described above, the fifth coil 1152c may be located in the third housing hole 1123a of the third housing side part 1123. The fifth coil 1152c may generate an electromagnetic force together with the fifth magnet 1151c, and thus Y-axis tilting of the mover 1130 and the rotation part 1140 with respect to the first housing 1120 may be performed.

Here, the X-axis tilting is tilting with respect to an X axis, and the Y-axis tilting is tilting with respect to a Y axis.

The Hall sensor unit 1153 may include a plurality of Hall sensors. In an embodiment, the Hall sensor unit 1153 may include a first sub-sensor 1153a, a second sub-sensor 1153b, and a third sub-sensor 1153c. Each sub-sensor may be provided as one or more sub-sensors.

The first sub-sensor 1153a may be located inside the third coil 1152a. Further, the second sub-sensor 1153b may be disposed symmetrical to the first sub-sensor 1153a in the first direction (the X-axis direction) and the third direction (the Z-axis direction). Further, the second sub-sensor 1153b may be located inside the fourth coil 1152b.

The first sub-sensor 1153a may detect a change in magnetic flux inside the third coil 1152a. The second sub-sensor 1153b may detect a change in magnetic flux in the fourth coil 1152b. Accordingly, location sensing between the third and fourth magnets 1151a and 1151b and the first and second sub-sensors 1153a and 1153b may be performed. For example, the first camera actuator according to the embodiment can control the X-axis tilting through the location sensing.

Further, the third sub-sensor 1153c may be located inside the fifth coil 1152c. The third sub-sensor 1153c may detect a change in magnetic flux inside the fifth coil 1152c. Accordingly, location sensing between the fifth magnet 1151c and the third sub-sensor 1153c may be performed. The first camera actuator according to the embodiment can control the Y-axis tilting through the location sensing.

The first board part 1154 may be located below the first driving part 1150. The first board part 154 may be electrically connected to the driving coil 1152 and the Hall sensor unit 1153. For example, the first board part 1154 may be coupled to the driving coil 1152 and the Hall sensor unit 1153 through a surface mounting technology (SMT). However, the present disclosure is not limited to this method.

The first board part 1154 may be located between the first shield can (not illustrated) and the first housing 1120 and coupled to a shield can 1101 and the first housing 1120. The coupling method may be various as described above. Further, through the coupling, the driving coil 1152 and the Hall sensor unit 1153 may be located inside an outer surface of the first housing 1120.

The first board part 1154 may include a circuit board having wiring patterns that may be electrically connected, such as a rigid printed circuit board (PCB), a flexible PCB, and a rigid-flexible PCB. However, the present disclosure is not limited to these types.

Details between the Hall sensor unit 1153 and the first board part 1154, which will be described below, will be described below.

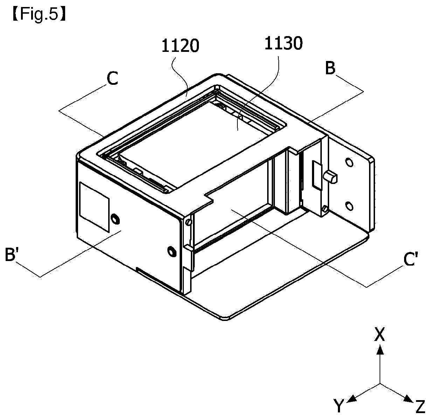

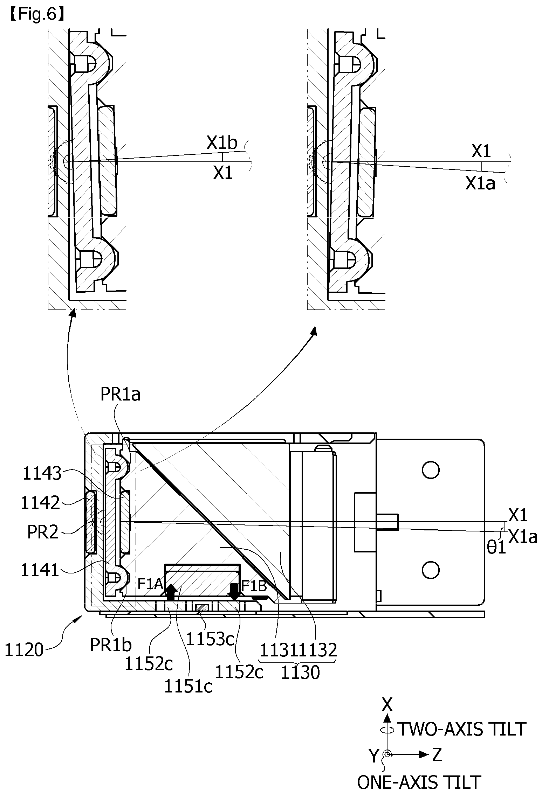

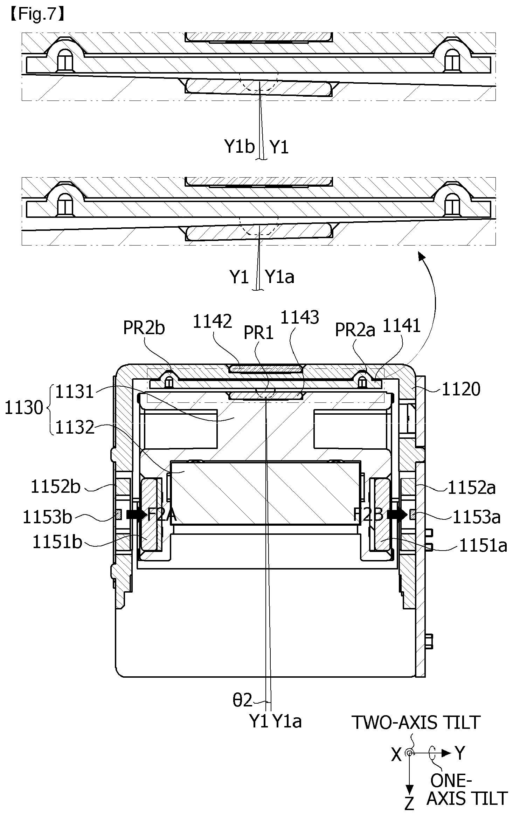

FIG. 5 is a perspective view of the first camera actuator according to the embodiment from which a shield can and a board are removed, FIG. 6 is a cross-sectional view along line BB' of FIG. 5, and FIG. 7 is a cross-sectional view along line CC' of FIG. 5.

Referring to FIGS. 5 to 7, the third coil 1152a may be located in the first housing side part 1121.

Further, the third coil 1152a and the third magnet 1151a may be located to face each other. The third magnet 1151a may at least partially overlap the third coil 1152a in the second direction (the Y-axis direction).

Further, the fourth coil 1152b may be located in the second housing side part 1122. Accordingly, the fourth coil 1152b and the fourth magnet 1151b may be located to face each other. The fourth magnet 1151b may at least partially overlap the fourth coil 1152b in the second direction (the Y-axis direction).

Further, the third coil 1152a and the fourth coil 1152b may overlap each other in the second direction (the Y-axis direction), and the third magnet 1151a and the fourth magnet 1151b may overlap each other in the second direction (the Y-axis direction). Due to this configuration, an electromagnetic force applied to the outer surface (the first holder outer surface and the second holder outer surface) of the holder is located on a parallel axis in the second direction (the Y-axis direction), so that the X-axis tilting may be accurately and precisely performed.

Further, a first accommodation groove (not illustrated) may be located in a fourth holder outer surface. Further, first protrusions PRla and PRlb may be arranged in the first accommodation groove. Accordingly, when the X-axis tilting is performed, the first protrusions PRla and PRlb may serve as a reference axis (or a rotational axis) of the tilting. Accordingly, the rotation plate 1141 and the mover 1130 may be moved in a left-right direction.

As described above, a second protrusion PR2 may be seated on a groove in the inner surface of the fourth housing side part 1124. Further, when the Y-axis tilting is performed, the rotation plate and the mover may rotate using the second protrusion PR2 as a reference axis of the Y-axis tilting.

Accordingly, the OIS may be performed by the first protrusion and the second protrusion.

Referring to FIG. 6, the Y-axis tilting may be performed. That is, the mover 1130 may rotate in the first direction (the X-axis direction) to implement the OIS.

In an embodiment, the fifth magnet 1151c disposed below the holder 1131, together with the fifth coil 1152c, may form an electromagnetic force to tilt or rotate the mover 1130 in the first direction (the X-axis direction).

In detail, the rotation plate 1141 may be coupled to the first housing 1120 and the mover 1130 by the first magnetic body 1142 inside the first housing 1120 and the second magnetic body 1143 inside the mover 1130. Further, the first protrusion PR1 may be separated in the first direction (the X-axis direction) and supported by the first housing 1120.

Further, the rotation plate 1141 may rotate or tilt using the second protrusion PR2 protruding toward the mover 1130 as a reference axis (or a rotational axis). That is, the rotation plate 1141 may perform the Y-axis tilting using the second protrusion PR2 as a reference axis.

For example, the OIS may be implemented by rotating the mover 1130 by a first angle θ1 in the X-axis direction (X1 -> X1b) by first electromagnetic forces F1A and F1B between the fifth magnet 1151c disposed in a third seating groove and the fifth coil 1152c disposed in a third board side part. The first angle θ1 may be in the range of ±1° to ±3°. However, the present disclosure is not limited thereto.

Hereinafter, in the first camera actuator according to various embodiments, the electromagnetic force may generate a force in a described direction to move the mover or move the mover in the described direction even when generating the force in a different direction. That is, the described direction of the electromagnetic force is a direction of a force generated by a magnet and a coil to move the mover.

Referring to FIG. 7, the X-axis tilting may be performed. That is, the mover 1130 may rotate in the second direction (the Y-axis direction) to implement the OIS.

The OIS may be implemented while the mover 1130 tilts or rotates (or tilts in the X-axis) in the Y-axis direction.

In an embodiment, the third magnet 1151a and the fourth magnet 1151b arranged in the holder 1131 may respectively generate electromagnetic forces together with the third coil 1152a and the fourth coil 1152b, thereby tilting or rotating the rotation plate 1141 and the mover 1130 in the second direction (the Y-axis direction).

The rotation plate 1141 may rotate or tilt (or tilt in the X-axis) in the second direction using the first protrusion PR1 as a reference axis (or a rotational axis).

For example, the OIS may be implemented by rotating the mover 1130 at a second angle θ2 in the Y-axis direction (Y1 -> Y1a) by second first electromagnetic forces F2A and F2B between the third and fourth magnets 1151a and 1151b disposed in a first seating groove and the third and fourth coils 1152a and 1152b disposed in first and second board side parts. The second angle θ2 may be in the range of ±1° to ±3°. However, the present disclosure is not limited thereto.

Further, as described above, the electromagnetic forces caused by the third and fourth magnets 1151a and 1151b and the third and fourth coils 1152a and 1152b may be applied in a third direction or a direction opposite to the third direction. For example, the electromagnetic force may be generated on a left side of the mover 1130 in the third direction (the Z-axis direction) and applied on a right side of the mover 1130 in the direction opposite to the third direction (the Z-axis direction). Accordingly, the mover 1130 may rotate about the first direction. Alternatively, the mover 1130 may move in the second direction.

In this way, the second camera actuator according to the embodiment may control the rotation plate 1141 and the mover 1130 to be rotated in the first direction (the X-axis direction) or the second direction (the Y-axis direction) by the electromagnetic force between the driving magnet in the holder and the driving coil disposed in the housing, to minimize occurrence of the decenter phenomenon or the tilting phenomenon when the OIS is implemented, thereby providing the best optical properties. Further, as described above, the "Y-axis tilting" corresponds to rotating or tilting in the first direction (the X-axis direction), and the "X-axis tilting" corresponds to rotating or tilting in the second direction (the Y-axis direction).

Further, a connection relationship of a Hall sensor, which will be described below, is a description applied to the second camera actuator.

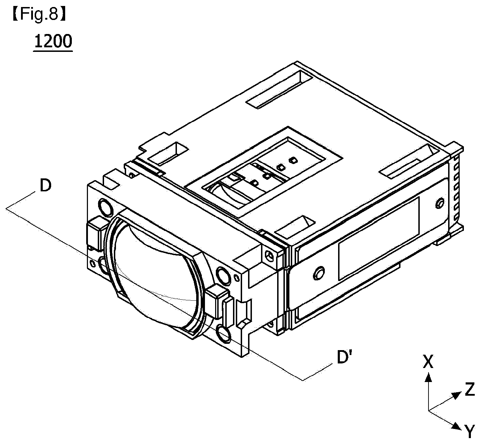

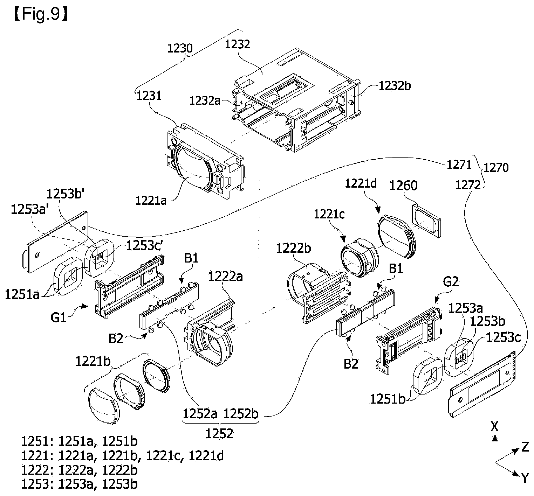

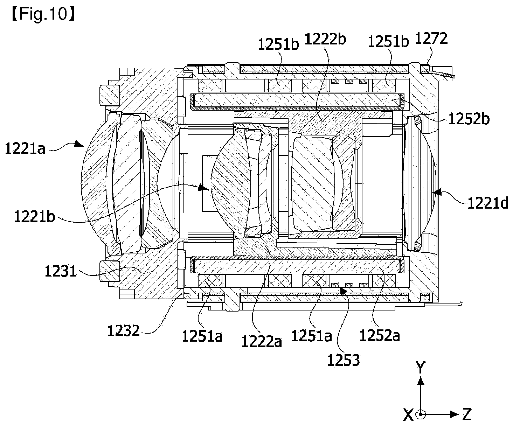

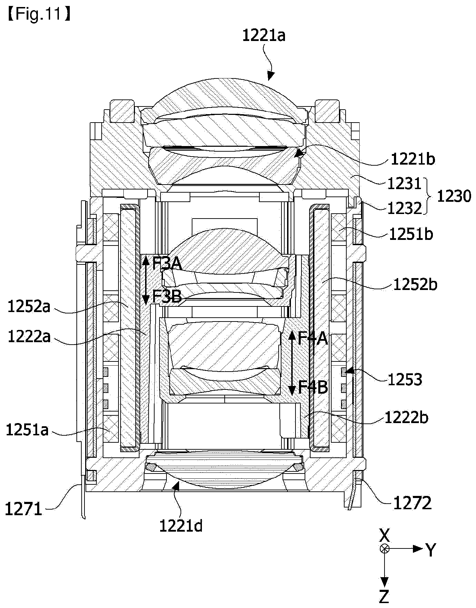

FIG. 8 is a perspective view of a second camera actuator according to an embodiment, FIG. 9 is an exploded perspective view of the second camera actuator according to the embodiment, FIG. 10 is a cross-sectional view along line DD' of FIG. 8, and FIG. 11 is a cross-sectional view along line EE' of FIG. 8.

Referring to FIGS. 8 to 11, the second camera actuator 1200 according to the embodiment may include a lens part 1220, a second housing 1230, a second driving part 1250, a base part (not illustrated), and a second board part 1270. Furthermore, the second camera actuator 1200 may further include a second shield can (not illustrated), an elastic part (not illustrated), and a bonding member (not illustrated). Furthermore, the second camera actuator 1200 according to an embodiment may further include the image sensor IS.

The second shield can (not illustrated) may be located in a region (for example, the outermost side) of the second camera actuator 1200 and located to surround the component (the lens part 1220, the second housing 1230, the elastic part (not illustrated), the second driving part 1250, the base part (not illustrated), the second board part 1270, and the image sensor IS) which will be described below.

The second shield can (not illustrated) may block or reduce electromagnetic waves generated on the outside. Accordingly, occurrence of malfunction of the second driving part 1250 can be reduced.

The lens part 1220 may be located inside the second shield can (not illustrated). The lens part 1220 may move in the third direction (the Z-axis direction). Accordingly, the above-described AF function can be performed.

In detail, the lens part 1220 may include a lens unit 1221 and a lens assembly 1222.

The lens unit 1221 may include at least one lens. Further, the lens unit 1221 may be provided as a plurality of lens units 1221, but the description will be made below on basis of a state in which one lens unit 1221 (for example, a first lens unit) is present. The lens unit may also include a first lens unit 1221a to a fourth lens unit 1221d. The number of the lens units may be changed depending on the camera actuator.

The lens unit 1221 may be coupled to the lens assembly 122 and may move in the third direction (the Z-axis direction) by an electromagnetic force generated between a first magnet 1252a and a second magnet 1252b coupled to the lens assembly 1222.

The lens assembly 1222 may include an opening region surrounding the lens unit 1221. Further, the lens assembly 1222 may be coupled to the lens unit 1221 in various methods. Further, the lens assembly 1222 may include a groove in a side surface thereof and may be coupled to the first magnet 1252a and the second magnet 1252b through the groove. The groove may be coated with a bonding member or the like.

Further, the lens assembly 1222 may be coupled to the elastic part (not illustrated) at an upper end and a rear end thereof. Accordingly, the lens assembly 1222 may move in the third direction (the Z-axis direction) and may be supported by the elastic part (not illustrated). That is, the lens assembly 1222 may be maintained in the third direction (the Z-axis direction) while a position of the lens assembly 1222 is maintained. The elastic part (not illustrated) may be formed of a leaf spring. However, the elastic part is not limited to this material.

Further, a first lens assembly 1222a and a second lens assembly 1222b may face a first guide part G1 and a second guide part G2, respectively. The first guide part G1 and the second guide part G2 may be located in a first side portion and a second side portion of the second housing 1230, which will be described below.

The second housing 1230 may include a (2-1)^{th} housing 1231 and a (2-2)^{th} housing 1232. The (2-1)^{th} housing 1231 may be coupled to the first lens unit 1221a and also coupled to the first camera actuator. The (2-1)^{th} housing 1231 may be located in front of the (2-2)^{th} housing 1232.

Further, the first guide part G1 and the second guide part G2 may include at least one groove (for example, a guide groove) or recess. Further, a first ball B1 or a second ball B2 may be seated on the groove or recess. Accordingly, the first ball B1 or the second ball B2 may move in the third direction (the Z-axis direction) in a guide groove of the first guide part G1 or a guide groove of the second guide part G2.

Alternatively, the first ball B1 or the second ball B2 may move in the third direction along a rail formed inside the first side portion of the second housing 1230 or a rail formed inside the second side portion of the second housing 1230.

The second housing 1230 may be disposed between the lens part 1220 and the second shield can (not illustrated). Further, the second housing 1230 may disposed to surround the lens part 1220.

A hole may be formed at a side portion of the second housing 1230. A first coil 1251a and a second coil 1251b may be arranged in the hole. The hole may be located to correspond to the groove of the lens assembly 1222.

The first magnet 1252a may be located to face the first coil 1251a. Further, the second magnet 1252b may be located to face the second coil 1251b.

The elastic part (not illustrated) may include a first elastic member (not illustrated) and a second elastic member (not illustrated). The first elastic member (not illustrated) may be coupled to an upper surface of the lens assembly 1222. The second elastic member (not illustrated) may be coupled to a lower surface of the lens assembly 1222. Further, as described above, the first elastic member (not illustrated) and the second elastic member (not illustrated) may be formed of a leaf spring. Further, the first elastic member (not illustrated) and the second elastic member (not illustrated) may provide elasticity for the movement of the lens assembly 1222.

The second driving part 1250 may provide driving forces F3 and F4 for moving the lens part 1220 in the third direction (the Z-axis direction). The second driving part 1250 may include a driving coil 1251 and a driving magnet 1252.

The lens part 1220 may move in the third direction (the Z-axis direction) by an electromagnetic force formed between the driving coil 1251 and the driving magnet 1252.

The driving coil 1251 may include the first coil 1251a and the second coil 1251b. The first coil 1251a and the second coil 1251b may be arranged in a hole formed in a side portion of the second housing 1230. Further, the first coil 1251a and the second coil 1251b may be electrically connected to the second board part 1270. Accordingly, the first coil 1251a and the second coil 1251b may receive a current or the like through the second board part 1270. Furthermore, the first coil 1251a and the second coil 1251b may be provided as one or more coils. For example, the number of the first coils 1251a that move one lens unit 1221 may be two. Further, the number of the second coils 1251b that move another lens unit 1221 may be two. Accordingly, the lens part or the lens unit 1221 may move with a long stroke in the optical axis direction. A first sub-board 1271 of the second board part 1270 may be disposed adjacent to the first coil 1251a, and a second-sub board 1272 may be disposed adjacent to the second coil 1251b.

The driving magnet 1252 may include the first magnet 1252a and the second magnet 1252b. The first magnet 1252a and the second magnet 1252b may be arranged in the above-described groove of the lens assembly 1222 and may be located to correspond to the first coil 1251a and the second coil 1251b.

Further, the sensor unit 1253 may include a plurality of Hall sensors. The Hall sensors may include a first Hall sensor 1253a to a third Hall sensor 1253b that detect the movement of one lens part. Furthermore, the sensor unit 1253 may further include a first Hall sensor 1253a' to a third Hall sensor 1253b' that detect the movement of another lens part. The description of the sensor unit, the sensor, and the Hall sensor, which will be described below, may be applied to the first Hall sensor 1253a to the third Hall sensor 1253b. Likewise, the description of the sensor unit, the sensor, and the Hall sensor, which will be described below, may be applied to the first Hall sensor 1253a' to the third Hall sensor 1253b'.

A base part 1260 may be located between the lens part 1220 and the image sensor IS. A component such as a filter may be fixed to the base part 1260. Further, the base part 1260 may be disposed to surround the above-described image sensor. Due to this configuration, since the image sensor is free from introduction of foreign substances, the reliability of an element can be improved. However, in some drawings below, the description will be made while this configuration is removed.

Further, the second camera actuator may be a zooming actuator or an AF actuator. For example, the second camera actuator may support one or more lenses and move the lens in response to the predetermined control signal of the controller to perform the AF function or the zooming function.

Further, the second camera actuator may perform a fixed zoom or a continuous zoom. For example, the second camera actuator may provide the movement of the lens unit 1221 or the lens assembly 1222.

As well, the second camera actuator may include a plurality of lens assemblies. For example, at least one of the first lens assembly 1222a, the second lens assembly 1222b, and the third lens assembly (not illustrated) may be arranged in the second camera actuator. The above contents may be applied to this. Accordingly, the second camera actuator may perform a high-magnification zooming function through a driving part. For example, the first lens assembly 1222a and the second lens assembly 1222b may be moving lenses that are moved through the driving part, and the third lens assembly (not illustrated) may be a fixed lens, but the present disclosure is not limited thereto. Further, the embodiments are not limited to the above location. For example, the third lens assembly (not illustrated) may function as a focator that images light at a specific location, and the first lens assembly 1222a may function as a variator that re-images, at another location, the image formed by the third lens assembly (not illustrated) that is the focator. Meanwhile, in the first lens assembly, the distance to the subject or the image distance is greatly changed, and thus the magnification change may be large. The first lens assembly that is the variator may perform an important role in changing a focal length or a magnification of the optical system. Meanwhile, an image point formed by the first lens assembly that is the variator may be slightly different according to a location. Accordingly, the second lens assembly may perform a location compensation function for the image formed by the variator. For example, the second lens assembly (not illustrated) may function as a compensator that accurately images, at an actual location of an image sensor, an image point formed by the first lens assembly that is the variator.

The image sensor IS may be located inside or outside the second camera actuator. In an embodiment, as illustrated, the image sensor IS may be located inside the second camera actuator. The image sensor IS may receive light and convert the received light into an electric signal. Further, the image sensor IS may have a plurality of pixels in the form of an array. Further, the image sensor IS may be located on an optical axis.

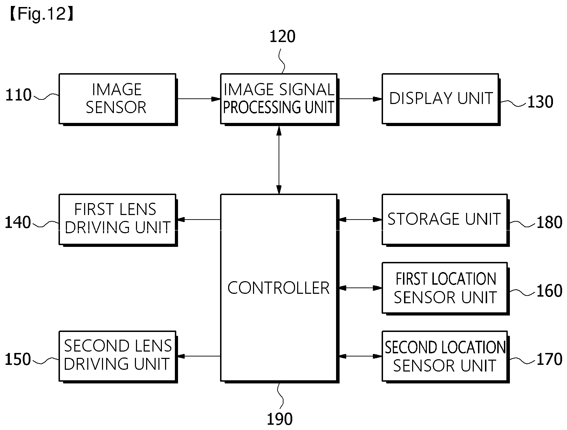

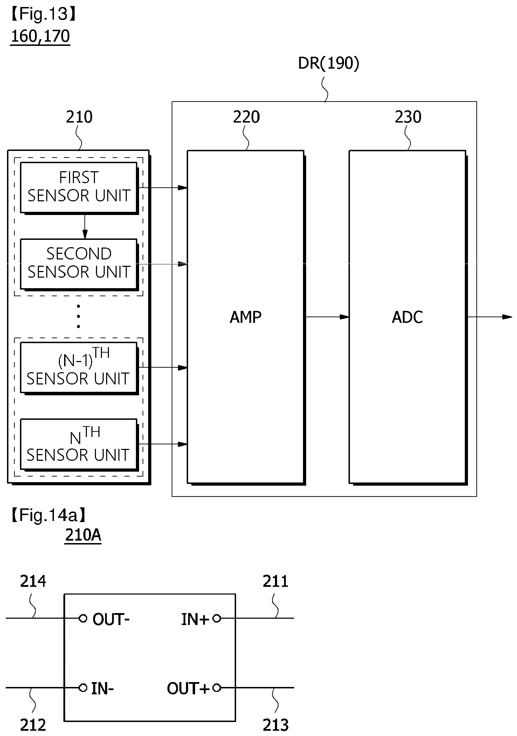

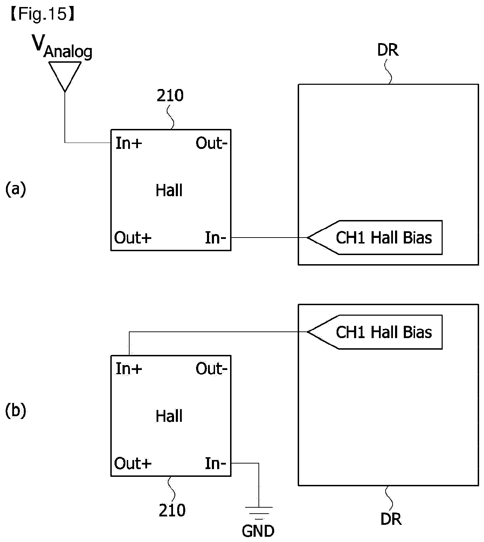

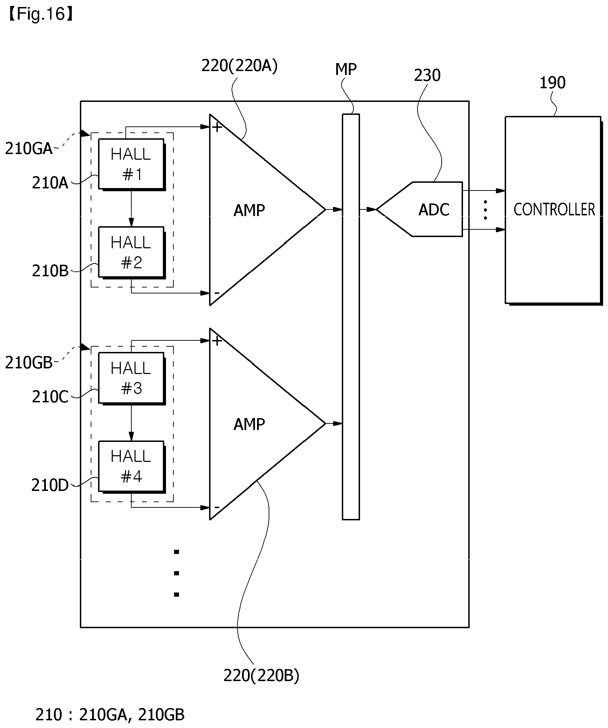

FIG. 12 is a block diagram illustrating a configuration of a camera device according to an embodiment of the present disclosure, FIG. 13 is a block diagram illustrating a detailed configuration of a location sensor part of FIG. 12, FIGS. 14A to 14C are views for describing a connection relationship of the sensor unit of FIG. 13, FIG. 15 is a view for describing a connection between a driving part and the sensor unit, and FIG. 16 is a view for describing a connection relationship of the sensor unit according to the embodiment of the present disclosure.

Referring to FIG. 12, the camera device may include an image sensor 110, an image signal processing unit 120, a display unit 130, a first lens driving part 140, a second lens driving part 150, a first location sensor part 160, a second location sensor part 170, a storage unit 180, and a controller 190.

As described above, the image sensor 110 processes an optical image of the subject formed through a lens. To this end, the image sensor 110 may pre-process the image acquired through the lens. Further, the image sensor 110 may convert the pre-processed image into electrical data and output the converted electrical data.

The image sensor 110 corresponds to the image sensor IS. Further, the image sensor 110 has a form in which a plurality of photodetectors are integrated as respective pixels, converts image information on the subject into electrical data, and outputs the converted electrical data. The image sensor 110 accumulates the quantity of input light and outputs an image photographed by the lens according to the accumulated quantity of light according to a vertical synchronization signal. In this case, the image is acquired by the image sensor 110 that converts light reflected from the subject into an electrical signal. Meanwhile, a color filter is required to obtain a color image using the image sensor 110, and for example, a color filter array (CFA) filter may be employed. The CFA allows only light representing one color to pass through each pixel, has a regularly arranged structure, and has various shapes according to an arrangement structure.

The image signal processing unit 120 processes the image output through the image sensor 110 in units of frames. In this case, the image signal processing unit 120 may be referred to as an image signal processor (ISP).

In this case, the image signal processing unit 120 may include a lens shading compensation unit (not illustrated). The lens shading compensation unit is a block for compensating for a lens shading phenomenon in which the quantities of light in a center and an edge region of the image are different, receives a lens shading setting value from the controller 190, which will be described below, and compensates for the color in the center and the edge region of the image.

Furthermore, the lens shading compensation unit may receive a shading variable set differently according to the type of illumination and process lens shading of the image according to the received variable. Accordingly, the lens shading compensation unit may process the lens shading by applying different shading degrees according to the type of illumination. Meanwhile, the lens shading compensation unit may receive the shading variable that is set differently according to an automatic exposure weight applied to a specific region of the image to prevent a saturation phenomenon occurring in the image and may process the lens shading of the image according to the received variable. More specifically, the lens shading compensation unit compensates for a brightness change occurring in an edge region of an image signal as the automatic exposure weight is applied to a central region of the image signal. That is, when the image signal is saturated by the illumination, the intensity of light is decreased from the center to the outside in the form of a concentric circle, and thus the lens shading compensation unit compensates for the brightness change compared to the center by amplifying an edge signal of the image signal.

Meanwhile, the image signal processing unit 120 may measure the clarity of the image acquired through the image sensor 110. That is, the image signal processing unit 120 may measure the visibility of the image to check focus accuracy of the image acquired through the image sensor 110. The visibility may be measured for each image obtained according to a location of a focus lens.

The display unit 130 displays the captured image according to control of the controller 190, which will be described below, and displays a setting screen required for capturing a picture or a screen for selecting an operation of a user. This may be provided to another mobile terminal or a mobile terminal.

The first lens driving part 140 may correspond to the first driving part 1150 (see FIG. 4). That is, the first lens driving part 140 may perform an electromagnetic interaction between the third to fifth coils and the third to fifth magnets in response to a control signal received from the controller 190. Further, the OIS may be performed by this interaction.

The second lens driving part 150 may correspond to the second driving part 1250 (see FIG. 8). That is, the second lens driving part 150 may perform an electromagnetic interaction between the first to second coils and the first to second magnets in response to the control signal received from the controller 190. Further, the zooming or the AF may be performed by this interaction.

For example, the focus lens may be moved in the optical axis direction.

The first location sensor part 160 includes a plurality of Hall sensors of the first camera actuator, and accordingly, detects a location of the mover or the optical member. That is, the first location sensor part 160 may detect the location of the first driving part disposed in the mover. This is for controlling the location of the mover or the optical member. Further, the first location sensor part 160 provides location data for moving the mover or the optical member.

The second location sensor part 170 includes a plurality of Hall sensors of the second camera actuator 1200, and accordingly, detects a location of the lens assembly, the driving magnet, or the lens part (see FIG. 9). That is, the second location sensor part 170 may detect a location of the second driving part adjacent to the lens part 1220. This is for controlling a location of the lens part. Further, the second location sensor part 170 provides location data for moving the lens part.

The storage unit 180 stores data required for operating the camera device. In particular, the storage unit 180 may store information on a zoom location and a focus location for each distance to the subject. That is, the focus location may be a location of the focus lens for precisely focusing the subject. Further, the focus location may be changed according to a zoom location for a zoom lens and the distance to the subject. Thus, the storage unit 180 stores data for the zoom location according to a distance and the focus location corresponding to the zoom location.

The controller 190 controls an overall operation of the camera device. In particular, the controller 190 may control the first location sensor part 160 and the second location sensor part 170 to provide the AF function. Furthermore, the controller 190 may include a driver DR, which will be described below. Further, as described above, the driving part may detect a location of the driving magnet from the Hall sensor and provide a current to the driving coil. That is, in the camera device or the lens driving device, the driving part may have a concept including the controller 190 and the first and second lens driving parts.

The controller 190 detects the location of the mover or the optical member through the first location sensor part 160. Preferably, the controller 190 detects a current location of the mover or the optical member through the first location sensor part 160 to move the mover or the optical member to a target location.

Further, when the current location of the mover or the optical member is detected through the first location sensor part 160, the controller 190 supplies, to the first lens driving part 140, a control signal for moving the mover or the optical member to a target location on the basis of the current location of the mover or the optical member.

Further, the controller 190 detects the location of the lens part through the second location sensor part 170. The controller 190 detects a current location of the lens part through the second location sensor part 170 to move the lens part to a target location.

Further, when the current location of the lens part is detected through the second location sensor part 170, the controller 190 may supply, to the second lens driving part 150, a control signal for moving the lens part to a target location on the basis of the current location of the lens part.

In this case, differential signals of detection signals detected by a plurality of sensor units constituting respective sensor parts through the first location sensor part 160 and the second location sensor part 170 may be input to the controller 190.

In the present disclosure, each of the first location sensor part 160 and the second location sensor part 170 includes a plurality of sensor units (corresponding to the "Hall sensor" described above). Further, the plurality of sensor units perform detection operations at installation locations thereof. That is, the plurality of sensor units may detect the location of the mover, the location of the lens part, and the like. In this case, in the present disclosure, the locations of the mover or the optical member and the lens part can be detected using the differential signals of the detection signals acquired through the plurality of sensor units.

In this case, the signals detected by the plurality of sensor units may be input to the controller 190, and accordingly, the locations of the mover or the optical member, or the second lens assembly or the driving magnet can be detected on the basis of the differential signals for the signals.

However, in the case of the above structure, an amplifier and an analog-to-digital converter should be arranged in a predetermined sensor unit. Further, the controller 190 may include a plurality of connection terminals connected to the analog-to-digital converter connected to the predetermined sensor unit.

In the present disclosure, digital data for the differential signal is acquired from a front-end stage, and accordingly, the acquired digital data may be input to the controller 190.

In other words, in the present disclosure, the digital data may be acquired by the first location sensor part 160 and the second location sensor part 170, and accordingly, only the acquired digital data may be input to the controller 190. Hereinafter, the second location sensor part 170, the second lens driving part 150, and the controller 190 (including the driver) will be described in detail.

The second location sensor part 170 may include the same configuration, and accordingly, may be connected to the controller 190. This configuration may be applied even to the first location sensor part 160, but in particular, when a long movement distance (or a long stroke) is provided, a plurality of Hall sensors are required, and thus the following description may be applied to the second camera actuator for the long movement distance. That is, the description will be made on the basis of the sensor unit (or the Hall sensor) and the controller (or the driver DR) for the second location sensor part 170.

Referring to FIG. 13, each second location sensor part 170 includes a plurality of sensor units 210, an amplifier 220, and an analog-digital converter 230.

The plurality of sensor units 210 include a sensor for detecting a location. Preferably, the plurality of sensor units 210 may be a plurality of Hall sensors, and the Hall sensors may correspond to the Hall sensor described in the second camera actuator. Hereinafter, the Hall sensor may correspond to the first Hall sensor to the third Hall sensor. That is, hereinafter, contents of detecting locations of the first and second lens assemblies or the first and second magnets from the Hall sensor of the second camera actuator and adjusting currents provided to the first and second coils in response to the detected locations will be described.

As a modification, the plurality of sensor units 210 may include a plurality of induction coils.

The plurality of sensor units 210 may be connected to each other between sensors for the same axis movement or axis tilting in each actuator, and the sensors may be connected to the amplifier 220 (AMP). A connection structure of the plurality of sensor units 210 will be described below in more detail.

In the present disclosure, the plurality of sensor units 210 may be connected to each other, and an output terminal of at least one of the sensor units may be connected to the amplifier 220. When there are the plurality of sensor units 210, the outermost sensor unit 210 or the sensor unit 210 connected to the outermost side may be connected to the amplifier 220. Accordingly, a signal of the sum of the detection signals detected by predetermined sensor units may be input to the amplifier 220. The signal is expressed as the sum of sensing ranges of the predetermined sensor units, and accordingly, a sensing range of the plurality of sensor units 210 input to the amplifier 220 may be extended compared to a single sensor unit.

The amplifier 220 may include a non-inversion (+) terminal and an inversion (-) terminal. Further, the amplifier 220 differentially amplifies a signal input to the non-inversion (+) terminal and a signal input to the inversion (-) terminal and outputs the amplified signal to the analog-digital converter 230. In the present specification, the analog-digital converter 230 is used interchangeably with a "converter." That is, output signals for the plurality of sensor units 210 have the sizes of mV and V, which may be sizes that do not proportionately match an input range of the analog-digital converter 230. Thus, the amplifier 220 differentially amplifies and outputs the signals input through the non-inversion (+) terminal and the inversion (-) terminal in order to match the input range of the analog-digital converter 230.

The analog-digital converter 230 may receive an analog signal from the amplifier 220, and accordingly, convert the received analog signal into a digital signal and output the converted digital signal. Preferably, the analog-digital converter 230 may receive the analog signal from the amplifier 220, convert the analog signal into a multi-bit digital signal, and output the converted digital signal. In this case, the output signal of the analog-digital converter 230 may be expressed as a value of 0 or 1.

In this case, the plurality of sensor units 210 according to the embodiment of the present disclosure may be configured as a plurality of Hall sensors. Hereinafter, an interconnection relationship between the Hall sensors when the plurality of sensor units 210 are configured as the Hall sensors will be described.

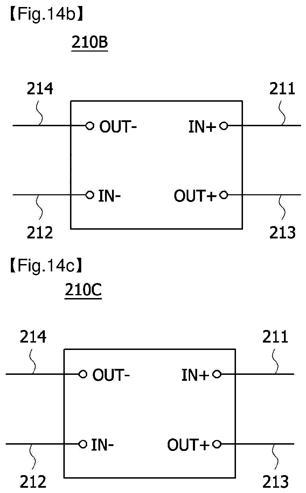

Referring to FIG. 14, each of the Hall sensors constituting the plurality of sensor units 210 includes four terminals. In this case, two terminals among the four terminals are input terminals, and the other terminals are output terminals.

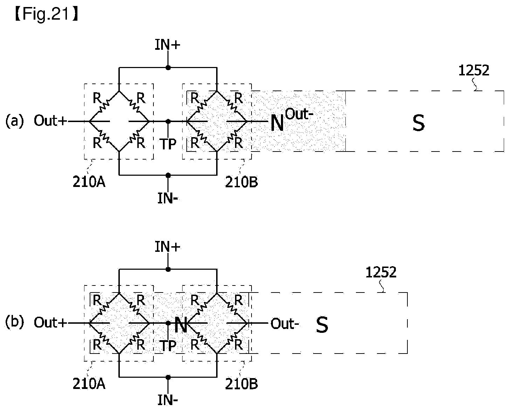

Further, the two input terminals are power input terminals, and the two output terminals are output terminals of the detection signals. In FIG. 21 as described below, the two input terminals correspond to IN+ and IN- and the two output terminals correspond to OUT+ and OUT-.

In an embodiment, the Hall sensor includes a first power terminal 211, a second power terminal 212, a first detection signal output terminal 213, and a second detection signal output terminal 214. Further, the first power terminal 211 is a terminal to which power having a positive (+) polarity is input, and the second power terminal 212 is a terminal to which power having a negative (-) polarity is input. Further, the first detection signal output terminal 213 is a terminal from which a detection signal having a positive (+) polarity is output, and the second detection signal output terminal 214 is a terminal from which a detection signal having a negative (-) polarity is output.

In this case, in the plurality of Hall sensors constituting the plurality of sensor units 210, a connection relationship between the two output terminals is different according to locations of the Hall sensors arranged on the camera device.

That is, in each of the plurality of Hall sensors, the first power terminal 211 may be connected to a power supply having a positive (+) polarity, and the second power terminal 212 may be connected to a power supply (or the ground) having a negative (-) polarity.

Further, the detection signal output terminals of each of the plurality of Hall sensors may have a different connection relationship according to the arrangement location. In this case, the number of the plurality of Hall sensors is at least two. In other words, the plurality of sensor units may include at least two sensor units.

First, a case in which the plurality of sensor units are configured with three Hall sensors will be described.

In an embodiment, in one Hall sensor between two Hall sensors, the first detection signal output terminal 213 and the second detection signal output terminal 214 are connected to the output terminals of the two Hall sensors arranged on the outside.

In this case, a case in which the plurality of sensor units are configured with three Hall sensors will be described. When the plurality of sensor units are configured with three Hall sensors, two Hall sensors are arranged on the outside, and the other Hall sensor is arranged between the two Hall sensors arranged on the outside. In an embodiment, in the one Hall sensor between the two Hall sensors arranged on the outside, the first detection signal output terminal 213 and the second detection signal output terminal 214 are connected to the output terminals of the two Hall sensors arranged on the outside. Further, in each of the two Hall sensors arranged on the outside, one output terminal among the two output terminals is connected to the amplifier 220, and the other one output terminal is connected to a neighboring Hall sensor.

Further, a case in which the plurality of sensor units are configured with two Hall sensors will be described. In an embodiment, among the two Hall sensors, the first detection signal output terminal of one Hall sensor may be connected to the second detection signal output terminal of the other Hall sensor. Further, the second detection signal output terminal of the one Hall sensor may be connected to the amplifier 220, and the first detection signal output terminal of the other Hall sensor may be connected to the amplifier 220. Hereinafter, a description will be made on the basis of this.

For example, referring to FIGS. 14A to 14C, the sensor unit may include a first Hall sensor 210A, a second Hall sensor 210B, and a third Hall sensor 210C connected in series. In the present specification, the Hall sensor may be called a "sensor" or a "location sensor." In this case, the first Hall sensor 210A, the second Hall sensor 210B, and the third Hall sensor 210C may correspond to the first Hall sensor 1253a, the second Hall sensor 1253b, and the third Hall sensor 1253c described above. Alternatively, the first Hall sensor 210A, the second Hall sensor 210B, and the third Hall sensor 210C may correspond to the first Hall sensor 1253a', the second Hall sensor 1253b', and the third Hall sensor 1253c'. That is, the first Hall sensor 210A, the second Hall sensor 210B, and the third Hall sensor 210C may correspond to the Hall sensors of the second camera actuator. Hereinafter, a description will be made on the basis of a state in which the first Hall sensor 210A, the second Hall sensor 210B, and the third Hall sensor 210C may correspond to the first Hall sensor 1253a to the third Hall sensor 1253c.

The first Hall sensor 210A may include a first detection signal output terminal 213 and a second detection signal output terminal 214. Further, the first Hall sensor 210A may include a first power terminal 211 and a second power terminal 212.

The second Hall sensor 210B may also include a first detection signal output terminal 213 and a second detection signal output terminal 214. Further, a second Hall sensor 210B may include the first power terminal 211 and a second power terminal 212.

The third Hall sensor 210C may include a first detection signal output terminal 213 and a second detection signal output terminal 214. Further, the third Hall sensor 210C may include a first power terminal 211 and a second power terminal 212.

Further, the first Hall sensor 210A and the second Hall sensor 210B may be connected in series. In this case, the first detection signal output terminal 213 of the first Hall sensor 210A may be connected to the inversion terminal (or the non-inversion terminal) of the amplifier. The second detection signal output terminal 214 of the first Hall sensor 210A may be connected to the first detection signal output terminal 213 of the second Hall sensor 210B. Further, the second detection signal output terminal 214 of the second Hall sensor 210B may be connected to the non-inversion terminal (or the inversion terminal) of the amplifier.

Furthermore, the first power terminal 211 of the first Hall sensor 210A and the first power terminal 211 of the second Hall sensor 210B may be connected to the same terminal (or the same node) or in parallel with each other. For example, the first power terminal 211 of the first Hall sensor 210A and the first power terminal 211 of the second Hall sensor 210B may receive the same voltage signal (or the same current signal).

Further, the second power terminal 212 of the first Hall sensor 210A and the second power terminal 212 of the second Hall sensor 210B may be connected to the same terminal (or the same node) or in parallel with each other. The second power terminal 212 of the first Hall sensor 210A and the second power terminal 212 of the second Hall sensor 210B may receive a Hall bias signal from the driver DR (or the driving part or the controller).

As described above, in the camera actuator according to an embodiment, the plurality of Hall sensors for performing location detection for the same axis tilting may have output terminals connected in series. In the case of this connection structure, a signal corresponding to the sum of the sensing ranges of the plurality of Hall sensors may be input to the amplifier 220. Further, the amplifier 220 may differentially amplify and output the signal corresponding to the sum of the input sensing ranges.

Accordingly, in the present disclosure, a differential sensing method having a wider detection range than that of a single sensing method may be provided. Further, in the present disclosure, the differential signal according to coupling of the plurality of location sensors is input to an input terminal of the amplifier, and thus exposure of an output signal of the location sensor to an offset noise in a path extending to the controller can be minimized.

Further, in the present disclosure, as the differential signals for the plurality of location sensors are output in the sensing part including the plurality of location sensors, the amplifier, and the analog-digital converter, the number of patterns/pins connected from the driving part to a printed circuit board (PCB) can be minimized, and accordingly, a space of the PCB can be saved.

Further, in the present disclosure, since differential values for the plurality of location sensors with respect to common mode noise are obtained, excellent characteristics not only for internal noise but also for external noise are achieved.

Further, in the present disclosure, according to a usage environment of the camera device, only the detection signal of a specific location sensor is transmitted to an amplifier stage or the differential signals for the plurality of location sensors are transmitted to the amplifier stage. Accordingly, in the present disclosure, an optimum detection signal can be obtained in an environment in which sensing sensitivity should be high and an environment in which a sensing range should be large.

Referring to FIG. 15, in the present specification, the Hall sensor will be described interchangeably with the sensor unit. The first power terminal 211 and the second power terminal 212 of the sensor unit 210 may receive an input voltage V_{Analog} and a bias power CH1 Hall Bias. For example, the first power terminal 211 of the sensor unit 210 may include at least one of the input voltage V_{Analog-} and the bias power CH1 Hall Bias. The second power terminal 212 of the sensor unit 210 may receive the other one of the input voltage V_{Analog-} and the bias power CH1 Hall Bias.

As illustrated, the first power terminal 211 of the sensor unit 210 may receive the input voltage V_{Analog-}, and the second power terminal 212 may receive the bias power CH1 Hall Bias from the driver DR.

Alternatively, the first power terminal 211 of the sensor unit 210 may receive the bias power CH1 Hall Bias, and the second power terminal 212 may receive the input voltage V_{Analog-} from the driver DR.

Power may be applied to the first power terminal 211 and the second power terminal 212 of the sensor unit 210 so that a power difference within a preset or predetermined range is generated. For example, even when the polarities are reversed, it is fine when the power difference (for example, a voltage difference) described above is not changed.

Further, the input voltage V_{Analog-} may be provided from the driver DR, the driving part, the controller, or a controller (for example, a power management unit) of a mobile terminal (for example, a set stage). The bias power CH1 Hall Bias may be provided from the driving part, the driver DR, or the controller.

Referring to FIG. 16, the lens driving device according to the embodiment may include N sensors (or the Hall sensor or the sensor unit) for sensing a magnetic field of one magnet (a first magnet or a second magnet) of the driving magnet. In this case, the driving part (or a driver) may receive output of a plurality of N sensors and control a current applied to the first coil (or the second coil) from the output.

In the present specification, N may be a natural number of three or more. Further, in an embodiment, when N is an odd number, the N sensors may be connected to have (N-1)/2 serial connections. Further, when N is an even number, the N sensors may be connected to have N/2 serial connections. In the present specification, a description will be made with reference that N is three or four. Furthermore, the sensor corresponds to the Hall sensor or the sensor unit described above.

As illustrated, a first sensor HALL#1 and a second sensor HALL#2 may be connected in series. Further, a third sensor HALL#3 and a fourth sensor HALL#4 may be connected in series. The first sensor HALL#1 and the second sensor HALL#2 form a first group sensor 210GA. The first group sensor 210GA may be called a "first group sensor unit" or a "first group Hall sensor." Further, the third sensor HALL#3 and the fourth sensor HALL#4 form a second group sensor 210GB. The second group sensor 210GB may be called a "second group sensor unit" or a "second group Hall sensor."

The first sensor HALL#1 and the second sensor HALL#2 connected in series may be connected to a first amplifier 220A. Further, the third sensor HALL#3 and the fourth sensor HALL#4 connected in series may be connected to a second amplifier 220B. Further, signals amplified by the first amplifier 220A and the second amplifier 220B may be provided to a selection unit MP. For example, the selection unit MP may be a multiplexer. For example, the selection unit MP may provide, to the converter 230, signals output from the first group sensor and the second group sensor through a charging unit (for example, a capacitor). The signals output from the first group sensor and the second group sensor may be converted into digital signals through the converter 230. Further, the controller 190 or the driver DR may receive the converted digital signals to detect the location of the driving magnet (for example, the first magnet). Furthermore, the location of the lens part (for example, the first lens assembly or the second lens assembly) may be detected through the detected location of the driving magnet. Accordingly, the controller 190 may control a current applied to the driving coil according to a movement distance of the lens part.

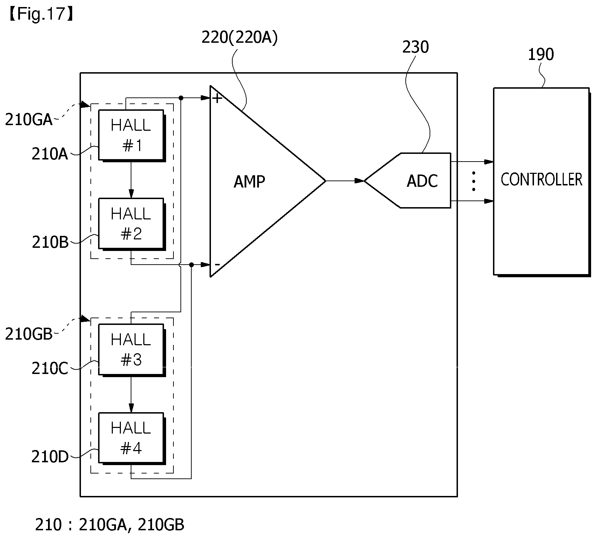

FIG. 17 is a view for describing a connection relationship of a sensor unit according to another embodiment of the present disclosure.

Referring to FIG. 17, as described in FIG. 16, the lens driving device according to the embodiment may include N sensors (or the Hall sensor or the sensor unit) for sensing a magnetic field of one magnet (the first magnet or the second magnet) of the driving magnet. In this case, the driving part (or the drive) may receive output of a plurality of N sensors and control the current applied to the first coil (or the second coil) from the output. Further, except for the following description, the above description may be equally applied.

As illustrated, the first sensor HALL#1 and the second sensor HALL#2 may be connected in series. Further, the third sensor HALL#3 and the fourth sensor HALL#4 may be connected in series. The first sensor HALL#1 and the second sensor HALL#2 form the first group sensor 210GA. The first group sensor 210GA may be called the "first group sensor unit" or the "first group Hall sensor." Further, the third sensor HALL#3 and the fourth sensor HALL#4 form the second group sensor 210GB. The second group sensor 210GB may be called the "second group sensor unit" or the "second group Hall sensor."

The first sensor HALL#1 and the second sensor HALL#2 connected in series may be connected to the amplifier 220. Further, the third sensor HALL#3 and the fourth sensor HALL#4 connected in series may be connected to the amplifier 220. For example, the first group sensor 210GA and the second group sensor 210GB may be connected in parallel to the same amplifier. That is, an integrated output value (for example, a sum or an average) of the first group sensor 210GA and the second group sensor 210GB may be provided to the amplifier 220. Further, the signal amplified by the amplifier may be provided to the selection unit or may be provided to the converter 230 when there is no selection unit. Further, the signals output from the first group sensor and the second group sensor may be converted into digital signals through the converter 230. Further, the controller 190 or the driver may receive the converted digital signals to detect the location of the driving magnet (for example, the first magnet). Furthermore, the location of the lens part (for example, the first lens assembly or the second lens assembly) may be detected through the detected location of the driving magnet. Accordingly, the controller 190 may control the current applied to the driving coil according to the movement distance of the lens part.

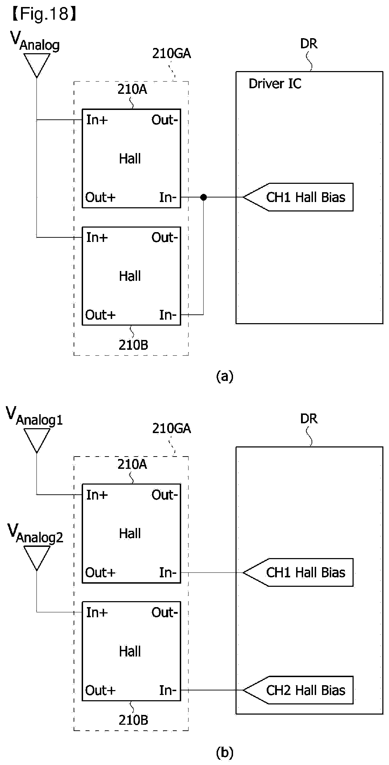

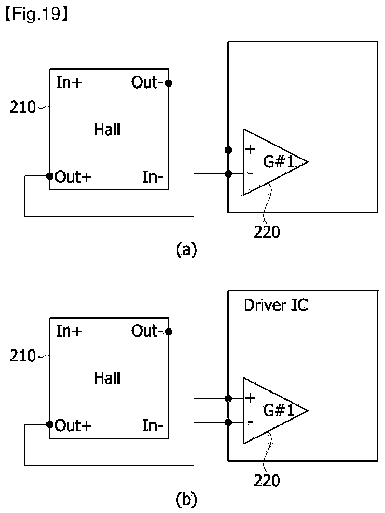

FIG. 18 is a view illustrating a connection relationship between a power terminal and a driver of a sensor unit according to various aspects, and FIG. 19 is a view illustrating a connection relationship between an output terminal and the driver of the sensor unit according to various aspects.

Referring to FIG. 18, as described above, the input voltage V_{Analog-} may be equally applied to each first power terminal (or each second power terminal) even in each group sensor.

Further, the bias power CH1 Hall bias may be equally applied to the second power terminal (or the first power terminal) of each group sensor.

For example, the first power terminal of the first sensor 210A and the first power terminal of the second Hall sensor 210B may be connected in parallel, and the input voltage V_{Analog-} may be applied thereto. Further, the second power terminal of the first sensor 210A and the second power terminal of the second Hall sensor 210B may be connected in parallel, and the bias power CH1 Hall bias may be applied thereto.

In contrast, the first power terminal of the first sensor 210A and the first power terminal of the second Hall sensor 210B may be connected in parallel, and the bias power CH1 Hall bias may be applied thereto. Further example, the second power terminal of the first sensor 210A and the second power terminal of the second Hall sensor 210B may be connected in parallel, and the input voltage V_{Analog-} may be applied thereto.

Referring to FIG. 19, each sensor unit or the Hall sensor 210 may be connected to the amplifier 220 of the driver DR. For example, the first detection signal output terminal and the second detection signal output terminal of the Hall sensor 210 may be connected to the inversion terminal and the non-inversion terminal of the amplifier 220. For example, the first detection signal output terminal of the Hall sensor 210 may be connected to the inversion terminal (or the non-inversion terminal). Further, the second detection signal output terminal of the Hall sensor 210 may be connected to the non-inversion terminal (or the inversion terminal).

Further, as illustrated, in contrast, the first detection signal output terminal of the Hall sensor 210 may be connected to the non-inversion terminal (or the inversion terminal). Further, the second detection signal output terminal of the Hall sensor 210 may be connected to the inversion terminal (or the non-inversion terminal).

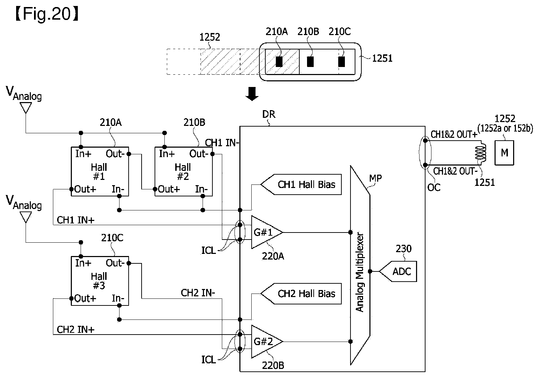

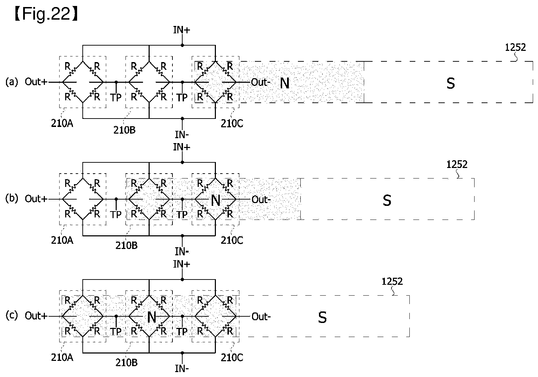

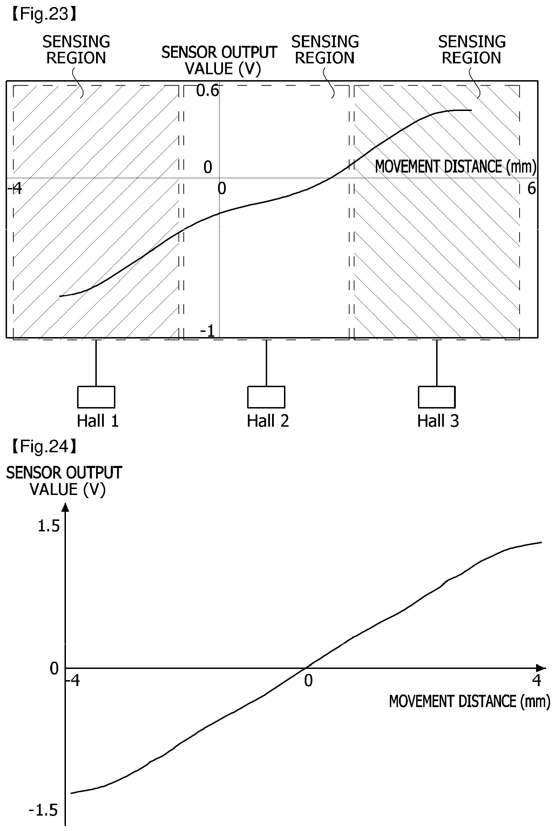

FIG. 20 is a block diagram of a sensor unit, a driver, a driving coil, and a driving magnet according to a first embodiment, FIG. 21 is a view for describing a relationship between the driving magnet and the sensor units when there are two sensor units, FIG. 22 is a view for describing a relationship between the driving magnet and the sensor units when there are three sensor units, FIG. 23 is a graph showing an output signal of the sensor unit in FIG. 22, and FIG. 24 is a graph showing an output signal of the sensor unit according to an embodiment.

Referring to FIG. 20, in the lens driving device according to the present embodiment, the N sensors described above may include the first sensor 210A to the third sensor 210C that detect a magnetic field of the first magnet 1252. Further, the driving part may include the controller including the driver DR. Accordingly, the driving part may receive outputs of the first sensor 210A to the third sensor 210C and control the current applied to the first coil. Here, the received outputs of the first sensor 210A to the third sensor 210C may be digital signals output or converted by the converter 230 and may be signals corresponding to the location of the first magnet that is the driving magnet.

The first Hall sensor 210A and the second Hall sensor 210B among the three sensors 210A to 210C may be connected in series. Further, the third Hall sensor 210C may be connected to the driver DR in parallel to the first Hall sensor 210A and the second Hall sensor 210B.

Furthermore, the N sensors, that is, the three sensors, may be sequentially arranged side by side in the optical axis direction.

For example, the first power terminal of the first Hall sensor 210A and the first power terminal of the second Hall sensor 210B may form the same node or may be connected in parallel and receive the input voltage V_{Analog-}.

Further, the second power terminal of the first Hall sensor 210A and the second power terminal of the second Hall sensor 210B may form the same node or may be connected in parallel and receive the bias power CH1 Hall bias.

Further, the first detection signal output terminal of the first Hall sensor 210A may be connected to an input channel of the driving part or the driver DR. For example, the driving part or the driver DR may include a first input channel IC1 and a second input channel IC2. The first input channel IC1 and the second input channel IC2 may each correspond to one terminal (any one of the non-inversion terminal and the inversion terminal) of the amplifier. Further, the first Hall sensor 210A and the second Hall sensor 210B may be connected to the first input channel IC1. Further, the third Hall sensor 210C may be connected to the second input channel IC2.

For example, the first detection signal output terminal of the first Hall sensor 210A may be connected to one terminal (any one of the non-inversion terminal and the inversion terminal) of the first amplifier 220A. Further, the second detection signal output terminal of the second Hall sensor 210B may be connected to the other terminal (the other one of the non-inversion terminal and the inversion terminal) of the first amplifier 220A. That is, a first input signal of the first input channel IC1 may be input to and amplified by the first amplifier 220A. Further, a second input signal of the second input channel IC2 may be input to and amplified by the second amplifier 220B. The first input signal may be a signal output from the first detection signal output terminal of the first Hall sensor 210A and the second detection signal output terminal of the second Hall sensor 210B. The second input signal may be a signal output from the first and second detection signal output terminals of the third Hall sensor.

Further, the third Hall sensor 210C may receive the input voltage V_{Analog-} through the first power terminal. Further, the second power terminal of the third Hall sensor 210C may receive a bias power CH2 Hall Bias.

Further, the first detection signal output terminal of the third Hall sensor 210C may be connected to one terminal (any one of the non-inversion terminal and the inversion terminal) of the second amplifier 220B. Further, the second detection signal output terminal of the third Hall sensor 210C may be connected to the other terminal (the other one of the non-inversion terminal and the inversion terminal) of the second amplifier 220B.

Furthermore, the signals amplified by the first amplifier 220A and the second amplifier 220B may be switched or sampled by the selection unit MP and provided to the converter 230.

Further, the first input signal or the second input signal selected by the selection unit (for example, the multiplexer) may be provided to the converter 230. Accordingly, the signals amplified by the first amplifier 220A and the second amplifier 220B may be converted into the digital signals.

Accordingly, the controller or the driving part may adjust the current applied to the driving magnet (for example, the first coil) according to the first input signal or the second input signal converted by the converter 230. The controller may detect the location of the driving magnet 1252 on the basis of the converted digital signals. Further, the controller (or the driver) may detect the location of the driving magnet or the lens part (or the lens assembly) to which the driving magnet is coupled and provide a current corresponding to a desired movement to the driving coil 1251. In this way, the respective amplifiers are used, so that a noise reduction effect of the signal can be improved. Further, in the present embodiment and the following description, the plurality of sensors corresponding to the one driving magnet may be connected in series between adjacent or non-adjacent Hall sensors. For example, the connection between the adjacent Hall sensors may facilitate electrical design.

Referring to FIGS. 21 and 24, when there are two sensors, the first Hall sensor 210A and the second Hall sensor 210B may be connected in series. Further, as described above, the driving magnet may move in the optical axis direction.

For example, as compared to FIG. 21A, in FIG. 21B, the first Hall sensor 210A is more adjacent to the driving magnet 1252, and thus a magnetic force applied from the driving magnet 1252 to the first Hall sensor 210A may be greater. Accordingly, the resistance of the first Hall sensor 210A may become higher. In the present specification, the Hall sensor or the sensor may be an element of which the resistance value is changed by the magnetic force. Furthermore, the Hall sensor or the sensor may have a circuit structure of a bridge circuit.

Further, the resistances of the first Hall sensor 210A and the second Hall sensor 210B may be the same or almost the same. For example, the resistances of the respective Hall sensors may be substantially the same. For example, since the resistances of the respective Hall sensors are substantially the same, linearity, which will be described below, can be secured. For example, "substantially the same" may mean that the resistance has an error range of -10% to +10%. The description therefor may be equally applied to the following description.

Further, in the first Hall sensor 210A and the second Hall sensor 210B, a gap between the first and second detection signal output terminals and a connection terminal TP is open, and thus a current may not flow. Hereinafter, the description will be made on the basis of this, and this may be applied to all of the plurality of sensors.

An equivalent resistance between the first detection signal output terminal of the first Hall sensor 210A and the connection terminal TP may be the same as an equivalent resistance between the connection terminal TP and the second detection signal output terminal of the second Hall sensor 210B. Accordingly, the first Hall sensor 210A and the second Hall sensor 210B may provide similar outputs (a magnetic field value) for movement or a movement distance of the driving magnet. That is, the location detection of the driving magnet 2152 by the first Hall sensor 210A and the second Hall sensor 210B may be linearly derived. Accordingly, in an embodiment, among the plurality of sensors, pairs of sensors may be connected in series. Further, as illustrated in FIG. 24, the outputs by the plurality of (three or more) Hall sensors may also have linearity at a desired driving distance of -4 mm to 4 mm. Further, for example, when a sensing region is 2.5 mm, the linearity is provided at -2.5 mm to 2.5 mm.

In other words, the accuracy of the location detection even for a long distance movement or stroke of the lens part (the first lens assembly) can be improved.

Referring to FIGS. 22 and 23, when there are three sensors, the first Hall sensor 210A to the third Hall sensor 210C may be connected in series. Further, as described above, the driving magnet may move in the optical axis direction.

For example, as compared to FIG. 22A, in FIG. 22B (or FIG. 22C), the first Hall sensor 210A is more adjacent to the driving magnet 1252, and thus the magnetic force applied from the driving magnet 1252 to the first Hall sensor 210A may be greater. Accordingly, the resistance of the first Hall sensor 210A may become higher. Further example, as compared to FIG. 22A, in FIG. 22B, the second Hall sensor 210A is more adjacent to the driving magnet 1252, and thus a magnetic force applied from the driving magnet 1252 to the second Hall sensor 210B may be greater.

Further, the resistances of the first Hall sensor 210A to the third Hall sensor 210C may be the same or almost the same. Accordingly, in the first Hall sensor 210A to the third Hall sensor 210C, gaps between the first and second detection signal output terminals and first and second connection terminals TP1 and TP2 are open, and thus a current may not flow. Hereinafter, the description will be made on the basis of this, and this may be applied to all of the plurality of sensors.

Further, an equivalent resistance between the first detection signal output terminal of the first Hall sensor 210A and the first connection terminal TP1 may be greater than an equivalent resistance between the first connection terminal TP1 and the second detection signal output terminal (the second connection terminal TP2) of the second Hall sensor 210B. An equivalent resistance between the first detection signal output terminal (the second connection terminal TP2) of the third Hall sensor 210C and the second detection signal output terminal of the third Hall sensor 210C may be greater than an equivalent resistance between the first connection terminal TP1 and the second detection signal output terminal (the second connection terminal TP2) of the second Hall sensor 210B.

An equivalent resistance between the first detection signal output terminal (the second connection terminal TP2) of the third Hall sensor 210C and the second detection signal output terminal of the third Hall sensor 210C may be the same as an equivalent resistance between the first detection signal output terminal of the first Hall sensor 210A and the first connection terminal TP1. Here, the first connection terminal TP1 may correspond to the second detection signal output terminal of the first Hall sensor 210A or the first detection signal output terminal of the second Hall sensor 210B. Further, the second connection terminal TP2 may correspond to the second detection signal output terminal of the second Hall sensor 210B or the first detection signal output terminal of the third Hall sensor 210C.

Accordingly, the first Hall sensor 210A and the third Hall sensor 210C may provide similar outputs (a magnetic field value) for the movement or the movement distance of the driving magnet. However, the second Hall sensor 210B may provide a different output (a magnetic field value) for the movement or the movement distance of the driving magnet as compared to the first Hall sensor 210A and the third Hall sensor 210C. For example, the second Hall sensor 210B may have a small inclination for the movement distance or stroke of the driving magnet.

As in FIG. 23, nonlinearity may increase in the second Hall sensor.

Accordingly, the location detection of the driving magnet 2152 by the first Hall sensor 210A to the third Hall sensor 210C may be non-linearly derived. In other words, the accuracy of the location detection even for the long distance movement or stroke of the lens part (the first lens assembly) can be reduced.

Accordingly, in the lens driving device according to the embodiment, for N Hall sensors (N is a natural number of three or more), when N is an odd number, the N sensors may be connected to have (N-1)/2 serial connections. Further, when N is an even number, the N sensors may be connected to have N/2 serial connections. Accordingly, the above-described change (for example, decrease) in the equivalent resistance may be prevented, the linearity of the plurality of Hall sensors or the entire sensor can be improved, and thus the accuracy of the location detection can be improved.

Furthermore, in the lens driving device according to the embodiment, the lens part (the first lens group or the first lens assembly) may move 5 mm or more in the optical axis direction. That is, the lens driving device according to the embodiment may implement a long stroke and may accurately detect the movement of the lens part even at the long stroke.

In other words, the lens part (for example, the first lens group (corresponding to at least one lens mounted on the first lens assembly) or the first lens assembly) may move two times or more a magnetic field sensing region of at least one of the first Hall sensor to the third Hall sensor. In an embodiment, the magnetic field sensing region may be a region having a slope of 0.5 to 1 time (50% to 100%) of the maximum slope of the detected magnetic field value with respect to the location of the driving magnet (for example, the first magnet) in each Hall sensor. In other words, the magnetic field sensing region is an almost linear section in which one Hall sensor detects the location of the driving magnet. For example, the magnetic field sensing region of one Hall sensor may be 2.5 mm, but the present disclosure is not limited thereto.

Further, the length of the driving magnet (the first magnet) in the optical axis direction may be greater than the maximum distance between the centers of the plurality of sensors (the first Hall sensor to the third Hall sensor). Further, the length of the driving magnet in the optical axis direction may be greater than the maximum length of the plurality of sensors in the optical axis direction. Accordingly, the plurality of sensors can easily detect a large stroke of the driving magnet.

Further, the lens driving device, which is a driving coil as described above, may include the first coil and the second coil. Unlike the following description, the second coil may be disposed side by side with the first coil in the optical axis direction. Further, the first coil may be disposed at a location corresponding to the first magnet. For example, the first coil may at least partially overlap the second coil in the second direction according to the movement of the first magnet. The second coil may receive a current from the driving part or the driver. Furthermore, the first coil and the second coil may be connected in parallel. Accordingly, as described above, with respect to the driving magnet (the first magnet), both the first coil and the second coil may be elements for generating electromagnetic forces. Accordingly, the lens driving device according to the embodiment may provide the long stroke.

Furthermore, as described above, the driving coil may include the first coil and the second coil overlapping the first coil in the second direction.

Further, as described above, the lens driving device may include the lens part (the second lens group) including at least one lens. The second lens group may mean a lens of the second lens assembly. Further, the lens driving device may include the second magnet (the driving magnet) coupled to the second lens group and the second coil (the driving coil) disposed at a location corresponding to the second magnet. Further, the lens driving device may include three or more sensors that detect a magnetic field of the second magnet. For example, the three or more sensors may be a fifth sensor (the Hall sensor) to a seventh sensor (or the Hall sensor). In description based on this, the driving part or the driver may receive outputs of the fifth sensor to the seventh sensor and control a current applied to the second coil.

Likewise, the driving part or the driver may include a third input channel and a fourth input channel, and the fifth Hall sensor and the sixth Hall sensor may be connected to the third input channel. Further, the seventh sensor may be connected to the fourth input channel.

The above description of the first lens group, the first magnet, the first coil, the sensors (the first to third sensors), the first input channel, and the second input channel may be equally applied to the second lens group, the second magnet, the second coil, the sensors (the fifth to seventh sensors), the third input channel, and the fourth input channel. However, the first lens group may move in the optical axis direction for any one of the zooming and the AF. Further, the second lens group may move in the optical axis direction for the other one of the zooming and the AF. Furthermore, when only the one first lens group moves in the optical axis direction, only the AF may be performed. Furthermore, the first magnet, the coil, and the sensors (the first to third sensors) may be located to face the second magnet, the second coil, and the sensors (the fifth to seventh sensors).

Further, in an embodiment, the first to third sensors may be arranged inside the first coil. Further, the fifth to seventh sensors may be arranged inside the second coil.

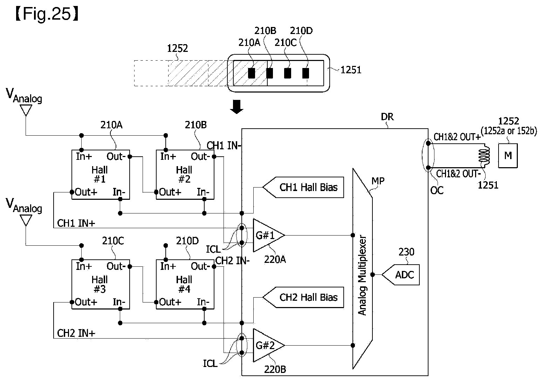

FIG. 25 is a block diagram of a sensor unit, a driver, a driving coil, and a driving magnet according to a second embodiment.

Except for the following description, the above description may be equally applied.

Referring to FIG. 25, in the lens driving device according to the present embodiment, the N sensors described above may include the first sensor 210A to a fourth sensor 210D that detect the magnetic field of the first magnet 1252. Further, the driving part may include the controller including the driver DR. Accordingly, the driving part may receive outputs of the first sensor 210A to the fourth sensor 210D and control the current applied to the first coil. Here, the received outputs of the first sensor 210A to the fourth sensor 210D may be digital signals output or converted by the converter 230 and may be signals corresponding to the location of the first magnet that is the driving magnet.

The first Hall sensor 210A and the second Hall sensor 210B among the four sensors 210A to 210D may be connected in series. Further, the third Hall sensor 210C and the fourth Hall sensor 210D may be connected in series.

Furthermore, the N sensors, that is, the four sensors, may be sequentially arranged side by side in the optical axis direction. Further, the first power terminal of the first Hall sensor 210A and the first power terminal of the second Hall sensor 210B may form the same node or may be connected in parallel and receive the input voltage V_{Analog-}. Further, the second power terminal of the first Hall sensor 210A and the second power terminal of the second Hall sensor 210B may form the same node or may be connected in parallel and receive the bias power CH1 Hall bias. The above description in the case of the first embodiment of FIG. 20 may be equally applied to the following description of the first and second Hall sensors.

Further, the first power terminal of the third Hall sensor 210C and the first power terminal of the fourth Hall sensor 210D may form the same node or may be connected in parallel and receive the input voltage V_{Analog-}. Further, the second power terminal of the third Hall sensor 210C and the second power terminal of the fourth Hall sensor 210D may form the same node or may be connected in parallel and receive the bias power CH2 Hall bias.

Further, the first detection signal output terminal of the third Hall sensor 210C may be connected to the input channel of the driving part or the driver DR. For example, the driving part or the driver DR may include the first input channel IC1 and the second input channel IC2. The first input channel IC1 and the second input channel IC2 may each correspond to one terminal (any one of the non-inversion terminal and the inversion terminal) of the amplifier. Further, the third Hall sensor 210C and the fourth Hall sensor 210D may be connected to the second input channel IC2. Further, the first and second Hall sensors 210A and 210B may be connected to the first input channel IC1.

For example, the first detection signal output terminal of the third Hall sensor 210C may be connected to one terminal (any one of the non-inversion terminal and the inversion terminal) of the second amplifier 220B. Further, the second detection signal output terminal of the fourth Hall sensor 210D may be connected to the other terminal (the other one of the non-inversion terminal and the inversion terminal) of the second amplifier 220B. That is, the second input signal of the second input channel IC2 may be input to and amplified by the second amplifier 220B. The second input signal may be a signal output from the first detection signal output terminal of the third Hall sensor 210C and the second detection signal output terminal of the fourth Hall sensor 210D.

Furthermore, the signals amplified by the first amplifier 220A and the second amplifier 220B may be switched or sampled by the selection unit MP and provided to the converter 230.

Further, the first input signal or the second input signal selected by the selection unit (for example, the multiplexer) may be provided to the converter 230. Accordingly, the signals amplified by the first amplifier 220A and the second amplifier 220B may be converted into the digital signals.

Accordingly, the controller or the driving part may adjust the current applied to the driving magnet (for example, the first coil) according to the first input signal or the second input signal converted by the converter 230. The controller may detect the location of the driving magnet 1252 from the converted digital signals, detect the location of the driving magnet or the lens part (or the lens assembly) to which the driving magnet is coupled, and provide the current corresponding to the desired movement to the driving coil 1251. In this way, the respective amplifiers are used, so that a noise reduction effect of the signal can be improved. Further, in the present embodiment and the following description, the plurality of sensors corresponding to the one driving magnet may be connected in series between adjacent or non-adjacent Hall sensors. For example, the connection between the adjacent Hall sensors may facilitate electrical design.

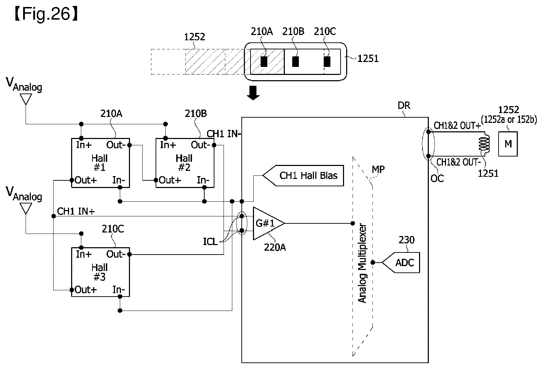

FIG. 26 is a block diagram of a sensor unit, a driver, a driving coil, and a driving magnet according to a third embodiment.

Referring to FIG. 26, hereinafter, except for the description according to the present embodiment, the above description may be applied.

In the lens driving device according to the present embodiment, the N sensors described above may include the first sensor 210A to the third sensor 210C that detect a magnetic field of the first magnet 1252. Further, the driving part may include the controller including the driver DR. Accordingly, the driving part may receive outputs of the first sensor 210A to the third sensor 210C and control the current applied to the first coil. Here, the received outputs of the first sensor 210A to the third sensor 210C may be digital signals output or converted by the converter 230 and may be signals corresponding to the location of the first magnet that is the driving magnet.

The first Hall sensor 210A and the second Hall sensor 210B among the three sensors 210A to 210C may be connected in series. Further, the third Hall sensor 210C may be connected to the driver DR in parallel to the first Hall sensor 210A and the second Hall sensor 210B.

Furthermore, the N sensors, that is, the three sensors, may be sequentially arranged side by side in the optical axis direction.

For example, the first power terminal of the first Hall sensor 210A and the first power terminal of the second Hall sensor 210B may form the same node or may be connected in parallel and receive the input voltage V_{Analog-}.

Further, the second power terminal of the first Hall sensor 210A and the second power terminal of the second Hall sensor 210B may form the same node or may be connected in parallel and receive the bias power CH1 Hall bias.

Further, the first detection signal output terminal of the first Hall sensor 210A may be connected to the input channel of the driving part or the driver DR. For example, the driving part or the driver DR may include only the first input channel IC1. The first input channel IC1 may correspond to one terminal (any one of the non-inversion terminal and the inversion terminal) of the amplifier. Further, the first Hall sensor 210A to the third Hall sensor 210C may be connected to the first input channel IC1. For example, the first Hall sensor 210A and the second Hall sensor 210B connected in series and the third Hall sensor 210C may be connected in parallel and connected to the first input channel IC1. Accordingly, in this case, there may be only one amplifier. For example, the first detection signal output terminal of the first Hall sensor 210A may be connected to one terminal (any one of the non-inversion terminal and the inversion terminal) of the first amplifier 220A. Further, the second detection signal output terminal of the second Hall sensor 210B may be connected to the other terminal (the other one of the non-inversion terminal and the inversion terminal) of the first amplifier 220A. Further, the first detection signal output terminal of the third Hall sensor 210C may be connected to one terminal (any one of the non-inversion terminal and the inversion terminal) of the first amplifier 220A. Further, the second detection signal output terminal of the third Hall sensor 210C may be connected to the other terminal (the other one of the non-inversion terminal and the inversion terminal) of the first amplifier 220A. That is, an integrated output value (for example, a sum or an average) of the outputs of the first and second Hall sensors and the third Hall sensor may be provided to the first amplifier 220A. In this case, the selection unit may be present or may not be present. Further, the amplified integrated output value may be converted into the digital values by the converter 230. Furthermore, the driver DR or the driving part may detect the location of the driving magnet through the digital values and adjust application of the current to the driving coil using the same.

Further, the third Hall sensor 210C may receive the input voltage V_{Analog-} through the first power terminal. Further, the second power terminal of the third Hall sensor 210C may receive the bias power CH1 Hall Bias. That is, the second power terminal of the third Hall sensor 210C may be connected in parallel to the second power terminals of the first and second Hall sensors 210A and 210B. Due to this configuration, one amplifier is used, and thus the easiness of designing a circuit or the like can be improved, and costs according to circuit design can be reduced.

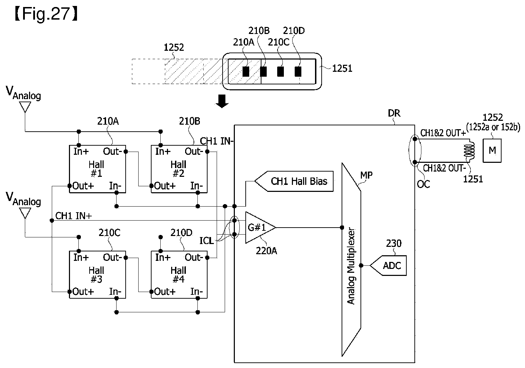

FIG. 27 is a block diagram of a sensor unit, a driver, a driving coil, and a driving magnet according to a fourth embodiment.

Except for the following description, the above description may be equally applied.

Referring to FIG. 27, in the lens driving device according to the present embodiment, the N sensors described above may include the first sensor 210A to the fourth sensor 210D that detect a magnetic field of the first magnet 1252. Further, the driving part may include the controller including the driver DR. Accordingly, the driving part may receive outputs of the first sensor 210A to the fourth sensor 210D and control the current applied to the first coil. Here, the received outputs of the first sensor 210A to the fourth sensor 210D may be digital signals output or converted by the converter 230 and may be signals corresponding to the location of the first magnet that is the driving magnet.

The first Hall sensor 210A and the second Hall sensor 210B among the four sensors 210A to 210D may be connected in series. Further, the third Hall sensor 210C and the fourth Hall sensor 210D may be connected in series. The first and second Hall sensors and the third and fourth Hall sensors may be connected in parallel to the driver DR.

Furthermore, the N sensors, that is, the four sensors, may be sequentially arranged side by side in the optical axis direction. Further, the first power terminal of the first Hall sensor 210A and the first power terminal of the second Hall sensor 210B may form the same node or may be connected in parallel and receive the input voltage V_{Analog-}. Further, the second power terminal of the first Hall sensor 210A and the second power terminal of the second Hall sensor 210B may form the same node or may be connected in parallel and receive the bias power CH1 Hall bias. The above description in the case of the first embodiment of FIG. 20 may be equally applied to the following description of the first and second Hall sensors.

Further, the first power terminal of the third Hall sensor 210C and the first power terminal of the fourth Hall sensor 210D may form the same node or may be connected in parallel and receive the input voltage V_{Analog-}. Further, the second power terminal of the third Hall sensor 210C and the second power terminal of the fourth Hall sensor 210D may form the same node or may be connected in parallel and receive the bias power CH1 Hall bias.

Further, the first detection signal output terminal of the third Hall sensor 210C may be connected to the input channel of the driving part or the driver DR.

For example, the driving part or the driver DR may include only the first input channel IC1. The first input channel IC1 may correspond to one terminal (any one of the non-inversion terminal and the inversion terminal) of the amplifier. Further, the first Hall sensor 210A to the fourth Hall sensor 210D may be connected to the first input channel IC1. For example, the first Hall sensor 210A and the second Hall sensor 210B connected in series and the third Hall sensor 210C and the fourth Hall sensor 210D connected in series may be connected in parallel and connected to the first input channel IC1. Accordingly, in this case, there may be only one amplifier. For example, the first detection signal output terminal of the first Hall sensor 210A may be connected to one terminal (any one of the non-inversion terminal and the inversion terminal) of the first amplifier 220A. Further, the second detection signal output terminal of the second Hall sensor 210B may be connected to the other terminal (the other one of the non-inversion terminal and the inversion terminal) of the first amplifier 220A. Further, the first detection signal output terminal of the third Hall sensor 210C may be connected to one terminal (any one of the non-inversion terminal and the inversion terminal) of the first amplifier 220A. Further, the second detection signal output terminal of the fourth Hall sensor 210D may be connected to the other terminal (the other one of the non-inversion terminal and the inversion terminal) of the first amplifier 220A. That is, an integrated output value (for example, a sum or an average) of the outputs of the first and second Hall sensors and the third and fourth Hall sensors may be provided to the first amplifier 220A. In this case, the selection unit may be present or may not be present. Further, the amplified integrated output value may be converted into the digital values by the converter 230. Furthermore, the driver Dr or the driving part may detect the location of the driving magnet through the digital values and adjust application of the current to the driving coil using the same. Due to this configuration, one amplifier is used, and thus the easiness of designing a circuit or the like can be improved, and costs according to circuit design can be reduced.

Furthermore, as a modification, the plurality of sensors may be connected to the plurality of input channels. Further, the number of the plurality of sensors may be greater than the number of the plurality of input channels. This may be applied to the N sensors (N is a natural number of three or more). Further, in this case, the number of the input channels may be N-1 or less.

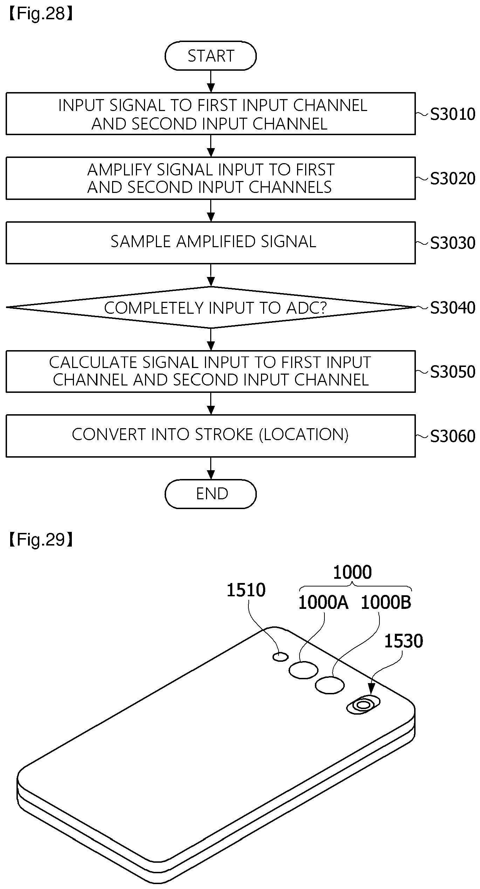

FIG. 28 is a flowchart for describing a method of driving the driver according to an embodiment.

Referring to FIG. 28, the driving part or the driver according to an embodiment may input a signal to at least one of a first input channel and a second input channel (S3010). In this case, according to various above-described embodiments, the number of the input channels may be changed.

Further, at least one amplifier may amplify the signal input to the first and second input channels (S3020). As described above, noise reduction of a signal can be improved through the plurality of amplifiers. Further, the number of amplifiers is reduced, and thus design can also be easier.

The selection unit may sample or select the signal amplified by the amplifier (S3030). As described above, the sampling or the selection may be performed using a capacitor.

Further, the amplified signal may be input to the converter (S3040). When the input is not completed, the sampling may be performed again.

Further, a converted value (the digital value) of the signal (the amplified value) input to the first input channel and the second input channel may be calculated (S3050). The storage unit may store the digital value and the location of the lens part corresponding thereto.

The driving part or the controller may calculate the location or stroke of the lens part using the signal (the digital value) converted by the converter (S3060).

FIG. 29 is a perspective view of a mobile terminal to which the camera device according to the embodiment is applied.

Referring to in FIG. 29, a mobile terminal 1500 of the embodiment may include the camera device 1000, a flash module 1530, and an AF device 1510, which are provided on a rear surface thereof.

The camera device 1000 may include an image capturing function and an AF function. For example, the camera device 1000 may include the AF function using an image.

The camera device 1000 processes an image frame of a still image or moving image obtained by an image sensor in a capturing mode or a video call mode.

The processed image frame may be displayed on a predetermined display unit and stored in a memory. A camera (not illustrated) may be disposed on a front surface of a body of the mobile terminal.

For example, the camera module 1000 may include a first camera device 1000A and a second camera device 1000B, and the OIS together with the AF function or the zooming function may be implemented by the first camera module 1000A.

The flash module 1530 may include a light emitting element therein that emits light. The flash module 1530 may be operated by a camera operation of the mobile terminal or control of a user.

The AF device 1510 may include one of packages of a surface light emitting laser element as a light emitting unit.

The AF device 1510 may include an AF function using laser. The AF device 1510 may be mainly used in a condition in which the AF function using an image of the camera device 1000 is degraded, for example, in a state close to 10 m or less or a dark environment.

The AF device 1510 may include a light emitting unit including a vertical cavity surface emitting laser (VSSEL) semiconductor element and a light receiving unit, such as a photodiode, which converts light energy into electrical energy.

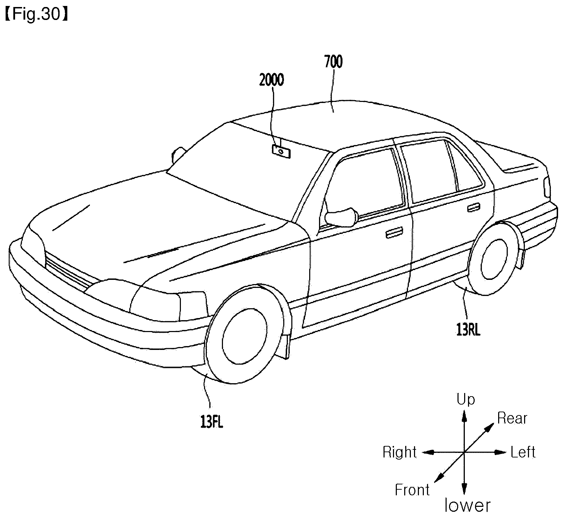

FIG. 30 is a perspective view of a vehicle to which the camera device according to the embodiment is applied.

For example, FIG. 30 is an external view of a vehicle including a vehicle driving assistance device to which the camera device 1000 according to the embodiment is applied.

Referring to FIG. 30, a vehicle 700 according to the embodiment may be provided with wheels 13FL and 13FR rotated by a power source and a predetermined sensor. The sensor may be a camera 2000, but the present disclosure is not limited thereto.

The camera sensor 2000 may be a camera sensor to which the camera device 1000 according to the embodiment is applied. The vehicle 700 according to the embodiment may acquire image information through the camera sensor 2000 that captures a front image or a surrounding image, determine whether a lane line is identified using the image information, and generate a virtual lane line when the lane line is not identified.

For example, the camera sensor 2000 may acquire a front image by photographing a front side of the vehicle 700, and a processor (not illustrated) may obtain image information by analyzing an object included in the front image.

For example, when an object such as a lane line, an adjacent vehicle, a driving obstacle, and a median, a curb, and a street tree corresponding to an indirect road marker is included in the image captured by the camera sensor 2000, the processor may detect this object and include the detected object in the image information. In this case, the processor may further supplement the image information by acquiring information on a distance from the object detected through the camera sensor 2000.

The image information may be information on the object captured in the image. The camera sensor 2000 may include an image sensor and an image processing module.

The camera sensor 2000 may process the still image or the moving image obtained by the image sensor (for example, a complementary metal-oxide semiconductor (CMOS) or a charge coupled device (CCD)).

The image processing module may process the still image or the moving image acquired through the image sensor, extract necessary information, and transmit the extracted information to the processor.

In this case, the camera sensor 2000 may include a stereo camera to improve the measurement accuracy of the object and further secure information such as a distance between the vehicle 700 and the object, but the present disclosure is not limited thereto.

According to the present disclosure, a lens driving device and a camera device that can be applied to an ultra-thin, ultra-small, and high-resolution camera can be implemented.

Further, according to the present disclosure, a lens driving device and a camera device that can increase a movement distance of a lens assembly through the number of driving coils can be implemented.

Further, according to the present disclosure, a lens driving device and a camera device that can more accurately detect a movement distance by improving the linearity for a location through connection between a plurality of Hall sensors can be implemented.

Further, according to the present disclosure, a lens driving device and a camera device that have improved design easiness and manufacturing cost reduction through the connection between a plurality of Hall sensors can be implemented.

Further, according to the present disclosure, a lens driving device and a camera device that have an increased movement distance for auto focusing (AF) in order to implement a high magnification zoom can be implemented.

Various and beneficial advantages and effects of the present disclosure are not limited to the above description and will be more easily understood in the above-described process of describing specific embodiments of the present disclosure.

Embodiments have been described above, but are merely illustrative, and do not limit the present disclosure, and those skilled in the art to which the present disclosure pertains may derive various modifications and applications not illustrated above without departing from the essential feature of the present embodiment. For example, each component specifically illustrated in the embodiments can be modified and implemented. Further, differences related to these modifications and applications should be construed as being included in the scope of the present disclosure defined in the appended claims.

## Claims

1. A lens driving device comprising:
a first lens group including at least one lens;
a first magnet coupled to the first lens group;
a first coil disposed at a location corresponding to the first magnet;
N sensors that detect a magnetic field of the first magnet; and
a driving part that receives outputs of the N sensors and controls a current applied to the first coil,
wherein N is a natural number of three or more,
when N is an odd number, the N sensors are connected to have (N-1)/2 serial connections, and
when N is an even number, the N sensors are connected to have N/2 serial connections.

2. The lens driving device of claim 1, wherein the N sensors include a first sensor, a second sensor, and a third sensor that detect the magnetic field of the first magnet,
the driving part receives outputs of the first sensor, the second sensor, and the third sensor and controls the current applied to the first coil,
the driving part includes a first input channel and a second input channel,
the first sensor and the second sensor are connected to the first input channel, and
the third sensor is connected to the second input channel.

3. The lens driving device of claim 2, wherein the N sensors further include a fourth sensor,
wherein the fourth sensor is connected to the second input channel.

4. The lens driving device of claim 2, wherein the first sensor and the second sensor are connected in series.

5. The lens driving device of claim 2, wherein the N sensors are sequentially arranged side by side in an optical axis direction.

6. The lens driving device of any one of claims 2 to 4, wherein the first lens group moves 5 mm or more in an optical axis direction.

7. The lens driving device of any one of claims 2 to 4, wherein the first lens group moves two times or more a magnetic field sensing region of at least one of the first sensor, the second sensor, and the third sensor, and
the magnetic field sensing region is a region having a slope of 0.5 to 1 time (50% to 100%) of a maximum slope of a detected magnetic field value with respect to a location of the first magnet by at least one sensor among the first sensor, the second sensor, and the third sensor.

8. The lens driving device of any one of claims 2 to 4, wherein a length of the first magnet in an optical axis direction is greater than a distance between a center of the first sensor and a center of the third sensor.

9. The lens driving device of any one of claims 2 to 4, comprising a second coil that is disposed parallel to the first coil in an optical axis direction, is disposed at a location corresponding to the first magnet, and receives a current from the driving part,
wherein the first coil and the second coil are connected in parallel.

10. The lens driving device of any one of claims 2 to 4, wherein respective resistance values of the N sensors are equal to each other.

11. The lens driving device of claim 2, comprising:
a second lens group including at least one lens;
a second magnet coupled to the second lens group;
a second coil disposed at a location corresponding to the second magnet; and
a fifth sensor, a sixth sensor, and a seventh sensor that detect a magnetic field of the second magnet,
wherein the driving part receives output of the fifth sensor, the sixth sensor, and the seventh sensor and controls a current applied to the second coil,
the driving part includes a third input channel and a fourth input channel,
the fifth sensor and the sixth sensor are connected to the third input channel, and
the seventh sensor is connected to the fourth input channel.

12. The lens driving device of claim 11, wherein the first sensor, the second sensor, and the third sensor are arranged inside the first coil.

13. The lens driving device of claim 11, wherein the fifth sensor, the sixth sensor, and the seventh sensor are arranged inside the second coil.

14. The lens driving device of claim 2, wherein a first input signal of the first input channel is input to and amplified by a first amplifier, and
a second input signal of the second input channel is input to and amplified by a second amplifier.

15. The lens driving device of claim 14, wherein the first input signal amplified by the first amplifier and the second input signal amplified by the second amplifier are provided to a selection unit.

16. The lens driving device of claim 15, wherein the first input signal or the second input signal selected by the selection unit is provided to a converter.

17. The lens driving device of claim 16, wherein the driving part adjusts the current applied to the first coil according to the first input signal or the second input signal converted by the converter.

18. A lens driving device comprising:
a first lens group including at least one lens;
a first magnet coupled to the first lens group;
a first coil disposed at a location corresponding to the first magnet;
a first sensor, a second sensor, and a third sensor that detect a magnetic field of the first magnet; and
a driving part that receives outputs of the first sensor, the second sensor, and the third sensor, and controls a current applied to the first coil,
wherein the driving part includes a first input channel,
the first sensor and the second sensor are connected in series, and
the first sensor and the second sensor connected in series and the third sensor are connected in parallel and connected to the first input channel.

19. A lens driving device comprising:
a first lens group including at least one lens;
a first magnet coupled to the first lens group;
a first coil disposed at a location corresponding to the first magnet;
a first sensor, a second sensor, a third sensor, and a fourth sensor that detect a magnetic field of the first magnet; and
a driving part that receives outputs of the first sensor, the second sensor, the third sensor, and the fourth sensor, and controls a current applied to the first coil,
wherein the driving part includes a first input channel,
the first sensor and the second sensor are connected in series,
the third sensor and the fourth sensor are connected in series, and
the first sensor and the second sensor connected in series and the third sensor and the fourth sensor connected in series are connected in parallel and connected to the first input channel.

20. A lens driving device comprising:
a first lens group including at least one lens;
a first magnet coupled to the first lens group;
a first coil disposed at a location corresponding to the first magnet;
a plurality of sensors that detect a magnetic field of the first magnet; and
a driving part that receives outputs of the plurality of sensors and controls a current applied to the first coil,
wherein the driving unit includes a plurality of input channels,
the plurality of sensors are connected to the plurality of input channels, and
the number of the plurality of sensors is greater than the number of the plurality of input channels.
